# EUROPEAN PATENT APPLICATION

(11) **EP 4 651 440 A1**
(43) Date of publication of application: **19.11.2025**
(21) Application number: 25175792.8
(22) Date of filing: 12.05.2025
(51) Int. Cl.: H04L 9/40, G06F 3/01, G06F 3/048, G06F 3/147

(54) **TECHNIQUES FOR ACCESSING CONTENT**

(30) Priority: 13.05.2024 US 202463646348 P; 10.06.2024 US 202463658350 P; 28.04.2025 US 202519191813
(71) Applicant: Apple Inc., Cupertino, CA 95014 (US)
(72) Inventor: LOUCH, John O., Cupertino, 95014 (US); RODRIGUEZ, Alejandro A., Cupertino, 95014 (US); NIELSEN, Benjamin E., Cupertino, 95014 (US); PAINE, Brittany D., Cupertino, 95014 (US); BARRETT, Cindy M., Cupertino, 95014 (US); KLARFELD, Jeffrey J., Cupertino, 95014 (US); CANDIOTTO, Leandro I., Cupertino, 95014 (US); SYKORA, Libor, Cupertino, 95014 (US); DESAI, Neil N., Cupertino, 95014 (US); CIRCOSTA, Nicholas J., Cupertino, 95014 (US); SHIH, Shannon, Cupertino, 95014 (US); FERNANDEZ, Todd R., Cupertino, 95014 (US); BENSON, Wade, Cupertino, 95014 (US)
(74) Representative: Zacco Denmark A/S

(57) **Abstract**

The present disclosure generally relates to accessing content. Some techniques are for remote access while locked in accordance with some embodiments. Other techniques are for selectively ceasing display of a user interface in accordance with some embodiments. Other techniques are for remote authentication in accordance with some embodiments. Other techniques are for revalidating secrets in accordance with some embodiments. Other techniques are for selectively allowing continued access in accordance with some embodiments. Other techniques are for interacting between devices in accordance with some embodiments.

## Description

### BACKGROUND

Electronic devices are becoming increasingly interconnected. For example, some devices are often accessing other devices. Ensuring that such access is secure has become more complicated. Accordingly, there is a need to improve techniques for accessing content.

### SUMMARY

Current techniques for accessing content are generally ineffective and/or inefficient. For example, some techniques require users to use particular devices for particular content and/or unlock devices to access content. This disclosure provides more effective and/or efficient techniques for accessing content using examples of accessing an application on one device from another device. It should be recognized that other types of electronic devices can be used with techniques described herein. For example, a function of one device can be accessed by another device. In addition, techniques optionally complement or replace other techniques for connecting electronic devices.

In some embodiments, a method that is performed at a first device is described. In some embodiments, the method comprises: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a non-transitory computer-readable storage medium storing one or more programs configured to be executed by one or more processors of a first device is described. In some embodiments, the one or more programs includes instructions for: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a transitory computer-readable storage medium storing one or more programs configured to be executed by one or more processors of a first device is described. In some embodiments, the one or more programs includes instructions for: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a first device is described. In some embodiments, the first device comprises one or more processors and memory storing one or more programs configured to be executed by the one or more processors. In some embodiments, the one or more programs includes instructions for: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a first device is described. In some embodiments, the first device comprises means for performing each of the following steps: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a computer program product is described. In some embodiments, the computer program product comprises one or more programs configured to be executed by one or more processors of a first device. In some embodiments, the one or more programs include instructions for: while the first device is in a locked state: receiving, from a second device different from the first device, a request to remotely access a first application of the first device; and in response to receiving the request to remotely access the first application of the first device: in accordance with a determination that a first set of one or more criteria is satisfied, sending, to the second device, a first user interface of the first application, wherein the first user interface is rendered by the first device; and in accordance with a determination that the first set of one or more criteria is not satisfied, forgoing sending, to the second device, the first user interface of the first application.

In some embodiments, a method that is performed at a first device that is in communication with a display generation component is described. In some embodiments, the method comprises: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a non-transitory computer-readable storage medium storing one or more programs configured to be executed by one or more processors of a first device that is in communication with a display generation component is described. In some embodiments, the one or more programs includes instructions for: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a transitory computer-readable storage medium storing one or more programs configured to be executed by one or more processors of a first device that is in communication with a display generation component is described. In some embodiments, the one or more programs includes instructions for: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a first device configured to communicate with a display generation component is described. In some embodiments, the first device comprises one or more processors and memory storing one or more programs configured to be executed by the one or more processors. In some embodiments, the one or more programs includes instructions for: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a first device configured to communicate with a display generation component is described. In some embodiments, the first device comprises means for performing each of the following steps: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a computer program product is described. In some embodiments, the computer program product comprises one or more programs configured to be executed by one or more processors of a first device that is in communication with a display generation component. In some embodiments, the one or more programs include instructions for: while the first device is in a locked state and displaying, via the display generation component, a first user interface, detecting a request to unlock the first device; and in response to detecting the request to unlock the first device: in accordance with a determination that a first set of one or more criteria is satisfied, wherein the first set of one or more criterion includes a criterion that is satisfied when the request to unlock the first device is a first type of unlock request, unlocking the first device and displaying, via the display generation component, a second user interface different from the first user interface; and in accordance with a determination that a second set of one or more criteria, different from the first set of one or more criteria, is satisfied, wherein the second set of one or more criteria includes a criterion that is satisfied when the request to unlock the first device is a second type of unlock request, unlocking the first device while maintaining display of, via the display generation component, the first user interface.

In some embodiments, a method that is performed at a first device is described. In some embodiments, the method comprises: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a non-transitory computer-readable storage medium storing one or more programs configured to be executed by one or more processors of a first device is described. In some embodiments, the one or more programs includes instructions for: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a transitory computer-readable storage medium storing one or more programs configured to be executed by one or more processors of a first device is described. In some embodiments, the one or more programs includes instructions for: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a first device is described. In some embodiments, the first device comprises one or more processors and memory storing one or more programs configured to be executed by the one or more processors. In some embodiments, the one or more programs includes instructions for: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a first device is described. In some embodiments, the first device comprises means for performing each of the following steps: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a computer program product is described. In some embodiments, the computer program product comprises one or more programs configured to be executed by one or more processors of a first device. In some embodiments, the one or more programs include instructions for: while the first device is in a locked state and participating in a remote session with a second device different from the first device, wherein the remote session corresponds to a first application of the first device, receiving, from the second device, a request to perform a first operation corresponding to the first application; and in response to receiving the request to perform the first operation corresponding to the first application: in accordance with a determination that the first operation requires authentication to be performed, causing the second device to initiate authentication; and in accordance with a determination that the first operation does not require authentication to be performed, performing the first operation.

In some embodiments, a method that is performed at a first device is described. In some embodiments, the method comprises: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a non-transitory computer-readable storage medium storing one or more programs configured to be executed by one or more processors of a first device is described. In some embodiments, the one or more programs includes instructions for: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a transitory computer-readable storage medium storing one or more programs configured to be executed by one or more processors of a first device is described. In some embodiments, the one or more programs includes instructions for: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a first device is described. In some embodiments, the first device comprises one or more processors and memory storing one or more programs configured to be executed by the one or more processors. In some embodiments, the one or more programs includes instructions for: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a first device is described. In some embodiments, the first device comprises means for performing each of the following steps: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a computer program product is described. In some embodiments, the computer program product comprises one or more programs configured to be executed by one or more processors of a first device. In some embodiments, the one or more programs include instructions for: after registering a secret for a communication channel with a second device different from the first device, temporarily invalidating the secret; after temporarily invalidating the secret: while the secret is temporarily invalidated, authenticating a first user; and in response to authenticating the first user, re-validating the secret; after registering the secret for the communication channel with the second device, receiving, from the second device, a request to establish the communication channel using the secret; and in response to receiving the request to establish the communication channel using the secret: in accordance with a determination that the secret is currently valid, establishing the communication channel between the first device and the second device; and in accordance with a determination that the secret is not currently valid, forgoing establishment of the communication channel between the first device and the second device.

In some embodiments, a method that is performed at a secure component of a first device is described. In some embodiments, the method comprises: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a non-transitory computer-readable storage medium storing one or more programs configured to be executed by one or more processors of a secure component of a first device is described. In some embodiments, the one or more programs includes instructions for: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a transitory computer-readable storage medium storing one or more programs configured to be executed by one or more processors of a secure component of a first device is described. In some embodiments, the one or more programs includes instructions for: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a secure component of a first device is described. In some embodiments, the secure component of a first device comprises one or more processors and memory storing one or more programs configured to be executed by the one or more processors. In some embodiments, the one or more programs includes instructions for: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a secure component of a first device is described. In some embodiments, the secure component of a first device comprises means for performing each of the following steps: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a computer program product is described. In some embodiments, the computer program product comprises one or more programs configured to be executed by one or more processors of a secure component of a first device. In some embodiments, the one or more programs include instructions for: while the first device is in a locked state: detecting a request to access content of the secure component; in response to detecting the request to access content of the secure component, granting, to a first process, access to content of the secure component for a first predetermined period of time; during the first predetermined period of time, detecting a request to extend access to content of the secure component for a second predetermined period of time; and in response to detecting the request to extend access to content of the secure component: in accordance with a determination that a first set of one or more criteria is satisfied, wherein the first set of one or more criteria includes a criterion that is satisfied when the request to access content of the secure component is a first type of request, granting, to the first process, access to content of the secure component for the second predetermined period of time; and in accordance with a determination that the first set of one or more criteria is not satisfied, forgoing grant of, to the first process, access to content of the secure component for the second predetermined period of time.

In some embodiments, a method that is performed at a first device is described. In some embodiments, the method comprises: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

In some embodiments, a non-transitory computer-readable storage medium storing one or more programs configured to be executed by one or more processors of a first device is described. In some embodiments, the one or more programs includes instructions for: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

In some embodiments, a transitory computer-readable storage medium storing one or more programs configured to be executed by one or more processors of a first device is described. In some embodiments, the one or more programs includes instructions for: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

In some embodiments, a first device is described. In some embodiments, the first device comprises one or more processors and memory storing one or more programs configured to be executed by the one or more processors. In some embodiments, the one or more programs includes instructions for: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

In some embodiments, a first device is described. In some embodiments, the first device comprises means for performing each of the following steps: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

In some embodiments, a computer program product is described. In some embodiments, the computer program product comprises one or more programs configured to be executed by one or more processors of a first device. In some embodiments, the one or more programs include instructions for: while the first device is in a locked state: receiving, from a second device different from the first device, first content; in response to receiving the first content, rendering combined content, wherein the combined content includes a portion of the first content and a portion of second content of a first application of the first device; and after rendering the combined content, sending, to the second device, the combined content.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a compute system in accordance with some embodiments.
FIG. 1B is a flow diagram illustrating a method for an application in accordance with some embodiments.
FIG. 1C is a flow diagram illustrating another method for an application in accordance with some embodiments.
FIG. 1D is a block diagram illustrating a device in accordance with some embodiments.
FIG. 2 is a block diagram illustrating a device with interconnected subsystems in accordance with some embodiments.
FIG. 3 is a block diagram illustrating a network environment in accordance with some embodiments.
FIG. 4 is a swim-lane diagram illustrating a process for participating in a remote access connection in accordance with some embodiments.
FIG. 5 is a swim-lane diagram illustrating a process for remote authentication in accordance with some embodiments.
FIG. 6 is a flow diagram illustrating a method for remote access while locked in accordance with some embodiments.
FIG. 7 is a flow diagram illustrating a method for selectively ceasing display of a user interface in accordance with some embodiments.
FIG. 8 is a flow diagram illustrating a method for remote authentication in accordance with some embodiments.
FIG. 9 is a flow diagram illustrating a method for re-validating secrets in accordance with some embodiments.
FIG. 10 is a flow diagram illustrating a method for selectively allowing continued access in accordance with some embodiments.
FIGS. 11A-11C illustrate exemplary user interfaces for interacting between devices in accordance with some embodiments.
FIG. 12 is a flow diagram illustrating a method for interacting between devices in accordance with some embodiments.

### DETAILED DESCRIPTION

The following description sets forth exemplary methods, parameters, and the like. It should be recognized, however, that such description is not intended as a limitation on the scope of the present disclosure but is instead provided as a description of exemplary embodiments.

Methods described herein can include one or more steps that are contingent upon one or more conditions being satisfied. It should be understood that a method can occur over multiple iterations of the same process with different steps of the method being satisfied in different iterations. For example, if a method requires performing a first step upon a determination that a set of one or more criteria is met and a second step upon a determination that the set of one or more criteria is not met, a person of ordinary skill in the art would appreciate that the steps of the method are repeated until both conditions, in no particular order, are satisfied. Thus, a method described with steps that are contingent upon a condition being satisfied can be rewritten as a method that is repeated until each of the conditions described in the method are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a method until all of the conditions upon which steps in the method are contingent have been satisfied. A person having ordinary skill in the art would also understand that, similar to a method with contingent steps, a system or computer readable storage medium can repeat the steps of a method as many times as needed to ensure that all of the contingent steps have been performed.

Although the following description uses terms "first," "second," etc. to describe various elements, these elements should not be limited by the terms. In some embodiments, these terms are used to distinguish one element from another. For example, a first subsystem could be termed a second subsystem, and, similarly, a second subsystem device or a subsystem device could be termed a first subsystem device, without departing from the scope of the various described embodiments. In some embodiments, the first subsystem and the second subsystem are two separate references to the same subsystem. In some embodiments, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

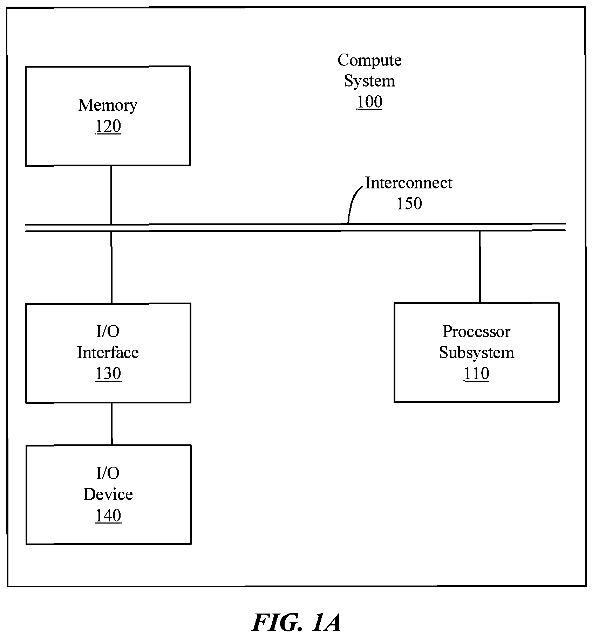

Turning to FIG. 1A, a block diagram of compute system 100 is illustrated. Compute system 100 is a non-limiting example of a compute system that can be used to perform functionality described herein. It should be recognized that other computer architectures of a compute system can be used to perform functionality described herein.

In the illustrated example, compute system 100 includes processor subsystem 110 communicating with (e.g., wired or wirelessly) memory 120 (e.g., a system memory) and I/O interface 130 via interconnect 150 (e.g., a system bus, one or more memory locations, or other communication channel for connecting multiple components of compute system 100). In addition, I/O interface 130 is communicating with (e.g., wired or wirelessly) to I/O device 140. In some embodiments, I/O interface 130 is included with I/O device 140 such that the two are a single component. It should be recognized that there can be one or more I/O interfaces, with each I/O interface communicating with one or more I/O devices. In some embodiments, multiple instances of processor subsystem 110 can be communicating via interconnect 150.

Compute system 100 can be any of various types of devices, including, but not limited to, a system on a chip, a server system, a personal computer system (e.g., a smartphone, a smartwatch, a wearable device, a tablet, a laptop computer, and/or a desktop computer), a sensor, or the like. In some embodiments, compute system 100 is included or communicating with a physical component for the purpose of modifying the physical component in response to an instruction. In some embodiments, compute system 100 receives an instruction to modify a physical component and, in response to the instruction, causes the physical component to be modified. In some embodiments, the physical component is modified via an actuator, an electric signal, and/or algorithm. Examples of such physical components include an acceleration control, a break, a gear box, a hinge, a motor, a pump, a refrigeration system, a spring, a suspension system, a steering control, a pump, a vacuum system, and/or a valve. In some embodiments, a sensor includes one or more hardware components that detect information about a physical environment in proximity to (e.g., surrounding) the sensor. In some embodiments, a hardware component of a sensor includes a sensing component (e.g., an image sensor or temperature sensor), a transmitting component (e.g., a laser or radio transmitter), a receiving component (e.g., a laser or radio receiver), or any combination thereof. Examples of sensors include an angle sensor, a chemical sensor, a brake pressure sensor, a contact sensor, a non-contact sensor, an electrical sensor, a flow sensor, a force sensor, a gas sensor, a humidity sensor, an image sensor (e.g., a camera sensor, a radar sensor, and/or a LiDAR sensor), an inertial measurement unit, a leak sensor, a level sensor, a light detection and ranging system, a metal sensor, a motion sensor, a particle sensor, a photoelectric sensor, a position sensor (e.g., a global positioning system), a precipitation sensor, a pressure sensor, a proximity sensor, a radio detection and ranging system, a radiation sensor, a speed sensor (e.g., measures the speed of an object), a temperature sensor, a time-of-flight sensor, a torque sensor, and an ultrasonic sensor. In some embodiments, a sensor includes a combination of multiple sensors. In some embodiments, sensor data is captured by fusing data from one sensor with data from one or more other sensors. Although a single compute system is shown in FIG. 1A, compute system 100 can also be implemented as two or more compute systems operating together.

In some embodiments, processor subsystem 110 includes one or more processors or processing units configured to execute program instructions to perform functionality described herein. For example, processor subsystem 110 can execute an operating system, a middleware system, one or more applications, or any combination thereof.

In some embodiments, the operating system manages resources of compute system 100. Examples of types of operating systems covered herein include batch operating systems

(e.g., Multiple Virtual Storage (MVS)), time-sharing operating systems (e.g., Unix), distributed operating systems (e.g., Advanced Interactive eXecutive (AIX), network operating systems (e.g., Microsoft Windows Server), and real-time operating systems (e.g., QNX). In some embodiments, the operating system includes various procedures, sets of instructions, software components, and/or drivers for controlling and managing general system tasks (e.g., memory management, storage device control, power management, or the like) and for facilitating communication between various hardware and software components. In some embodiments, the operating system uses a priority-based scheduler that assigns a priority to different tasks that processor subsystem 110 can execute. In such examples, the priority assigned to a task is used to identify a next task to execute. In some embodiments, the priority-based scheduler identifies a next task to execute when a previous task finishes executing. In some embodiments, the highest priority task runs to completion unless another higher priority task is made ready.

In some embodiments, the middleware system provides one or more services and/or capabilities to applications (e.g., the one or more applications running on processor subsystem 110) outside of what the operating system offers (e.g., data management, application services, messaging, authentication, API management, or the like). In some embodiments, the middleware system is designed for a heterogeneous computer cluster to provide hardware abstraction, low-level device control, implementation of commonly used functionality, message-passing between processes, package management, or any combination thereof. Examples of middleware systems include Lightweight Communications and Marshalling (LCM), PX4, Robot Operating System (ROS), and ZeroMQ. In some embodiments, the middleware system represents processes and/or operations using a graph architecture, where processing takes place in nodes that can receive, post, and multiplex sensor data messages, control messages, state messages, planning messages, actuator messages, and other messages. In such examples, the graph architecture can define an application (e.g., an application executing on processor subsystem 110 as described above) such that different operations of the application are included with different nodes in the graph architecture.

In some embodiments, a message sent from a first node in a graph architecture to a second node in the graph architecture is performed using a publish-subscribe model, where the first node publishes data on a channel in which the second node can subscribe. In such examples, the first node can store data in memory (e.g., memory 120 or some local memory of processor subsystem 110) and notify the second node that the data has been stored in the memory. In some embodiments, the first node notifies the second node that the data has been stored in the memory by sending a pointer (e.g., a memory pointer, such as an identification of a memory location) to the second node so that the second node can access the data from where the first node stored the data. In some embodiments, the first node would send the data directly to the second node so that the second node would not need to access a memory based on data received from the first node.

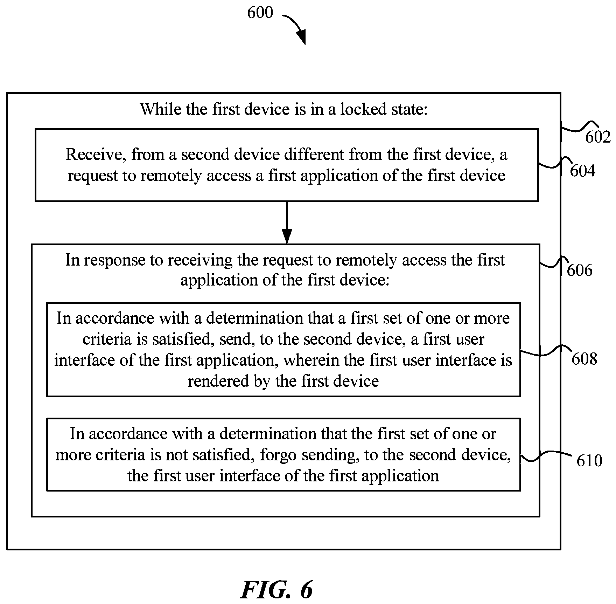

Memory 120 can include a computer readable medium (e.g., non-transitory or transitory computer readable medium) usable to store (e.g., configured to store, assigned to store, and/or that stores) program instructions executable by processor subsystem 110 to cause compute system 100 to perform various operations described herein. For example, memory 120 can store program instructions to implement the functionality associated with methods 600, 700, 800, 900, 1000, and 1200 (FIGS. 6, 7, 8, 9, 10, and 12) described below.

Memory 120 can be implemented using different physical, non-transitory memory media, such as hard disk storage, floppy disk storage, removable disk storage, flash memory, random access memory (RAM-SRAM, EDO RAM, SDRAM, DDR SDRAM, RAMBUS RAM, or the like), read only memory (PROM, EEPROM, or the like), or the like. Memory in compute system 100 is not limited to primary storage such as memory 120. Compute system 100 can also include other forms of storage such as cache memory in processor subsystem 110 and secondary storage on I/O device 140 (e.g., a hard drive, storage array, etc.). In some embodiments, these other forms of storage can also store program instructions executable by processor subsystem 110 to perform operations described herein. In some embodiments, processor subsystem 110 (or each processor within processor subsystem 110) contains a cache or other form of on-board memory.

I/O interface 130 can be any of various types of interfaces configured to communicate with other devices. In some embodiments, I/O interface 130 includes a bridge chip (e.g., Southbridge) from a front-side bus to one or more back-side buses. I/O interface 130 can communicate with one or more I/O devices (e.g., I/O device 140) via one or more corresponding buses or other interfaces. Examples of I/O devices include storage devices (hard drive, optical drive, removable flash drive, storage array, SAN, or their associated controller), network interface devices (e.g., to a local or wide-area network), sensor devices (e.g., camera, radar, LiDAR, ultrasonic sensor, GPS, inertial measurement device, or the like), and auditory or visual output devices (e.g., speaker, light, screen, projector, or the like). In some embodiments, compute system 100 is communicating with a network via a network interface device (e.g., configured to communicate over Wi-Fi, Bluetooth, Ethernet, or the like). In some embodiments, compute system 100 is directly or wired to the network.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

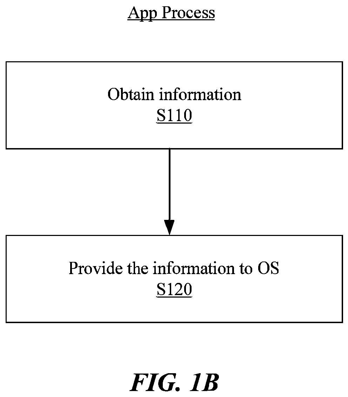

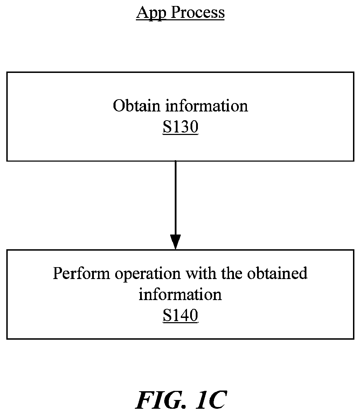

Implementations within the scope of the present disclosure include a computer-readable storage medium that encodes instructions organized as an application (e.g., application S160) that, when executed by one or more processing units, control an electronic device (e.g., device S150) to perform the method of FIG. 1B, the method of FIG. 1C, and/or one or more other processes and/or methods described herein.

It should be recognized that application S160 can be any suitable type of application, including, for example, one or more of: a messaging application, a maps application, a fitness application, a health application, a digital payments application, a media application, and/or a social network application. In some embodiments, application S160 is an application that is pre-installed on device S150 at purchase (e.g., a first party application). In other embodiments, application S160 is an application that is provided to device S150 via an operating system update file (e.g., a first party application or a second party application). In other embodiments, application S160 is an application that is provided via an application store. In some embodiments, the application store can be an application store that is pre-installed on device S150 at purchase (e.g., a first party application store). In other embodiments, the application store is a third-party application store (e.g., an application store that is provided by another application store, downloaded via a network, and/or read from a storage device).

Referring to FIG. 1B, application S160 obtains information (e.g., S110). In some embodiments, the information obtained at S110 includes positional information, time information, notification information, user information, environment information, electronic device state information, weather information, media information, historical information, event information, hardware information, and/or motion information. In some embodiments, in response to and/or after obtaining the information at S110, application S160 provides the information to operating system (e.g., S120).

Referring to FIG. 1C, application S160 obtains information (e.g., S130). In some embodiments, the information obtained at S130 includes positional information, time information, notification information, user information, environment information electronic device state information, weather information, media information, historical information, event information, hardware information and/or motion information. in response to and/or after obtaining the information at S130, application S160 performs an operation with the information (e.g., S140). In some embodiments, the operation performed at S140 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of operating system S210 based on the information.

In some embodiments, one or more steps of the method of FIG. 1B and/or the method of FIG. 1C is performed in response to a trigger. In some embodiments, the trigger includes detection of an event, a notification received from operating system S210, a user input, and/or a response to a call to an API provided by operating system S210.

In some embodiments, the instructions of application S160, when executed, control device S150 to perform the method of FIG. 1B and/or the method of FIG. 1C by calling an application programming interface (API) (e.g., API S190) provided by operating system S210. In some embodiments, application S160 performs at least a portion of the method of FIG. 1B and/or the method of FIG. 1C without calling API S190.

In some embodiments, one or more steps of the method of FIG. 1B and/or the method of FIG. 1C includes calling an API (e.g., API S190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

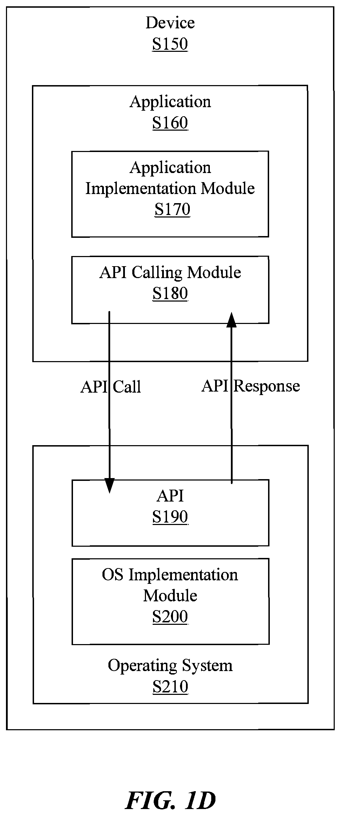

Referring to FIG. 1D, device S150 is illustrated. In some embodiments, device S150 is a personal computing device, a smart phone, a smart watch, a fitness tracker, a head mounted display (HMD) device, a media device, a communal device, a speaker, a television, and/or a tablet. As illustrated in FIG. 1D, device S150 includes application S160 and operating system S210. Application S160 includes application implementation module S170 and API calling module S180. Operating system S210 includes API S190 and OS implementation module S200. It should be recognized that device S150, application S160, and/or operating system S210 can include more, fewer, and/or different components than illustrated in FIG. 1D.

In some embodiments, application implementation module S170 includes a set of one or more instructions corresponding to one or more operations performed by application S160. For example, when application S160 is a messaging application, application implementation module S170 can include operations to receive and send messages. In some embodiments, application implementation module S170 communicates with API calling module to communicate with operating system S210 via API S190.

In some embodiments, API S190 is a software module (e.g., a collection of computer-readable instructions) that provides an interface that allows a different module (e.g., API calling module S180) to access and/or use one or more functions, methods, procedures, data structures, classes, and/or other services provided by OS implementation module S200 of operating system S210. For example, API-calling module S180 can access a feature of OS implementation module S200 through one or more API calls or invocations (e.g., embodied by a function or a method call) exposed by API S190 and can pass data and/or control information using one or more parameters via the API calls or invocations. In some embodiments, API S190 allows application S160 to use a service provided by a Software Development Kit (SDK) library. In other embodiments, application S160 incorporates a call to a function or method provided by the SDK library and provided by API S190 or uses data types or objects defined in the SDK library and provided by API S190. In some embodiments, API-calling module S180 makes an API call via API S190 to access and use a feature of OS implementation module S200 that is specified by API S190. In such embodiments, OS implementation module S200 can return a value via API S190 to API-calling module S180 in response to the API call. The value can report to application S160 the capabilities or state of a hardware component of device S150, including those related to aspects such as input capabilities and state, output capabilities and state, processing capability, power state, storage capacity and state, and/or communications capability. In some embodiments, API S190 is implemented in part by firmware, microcode, or other low level logic that executes in part on the hardware component.

In some embodiments, API S190 allows a developer of API-calling module S180 (which can be a third-party developer) to leverage a feature provided by OS implementation module S200. In such embodiments, there can be one or more API-calling modules (e.g., including API-calling module S180) that communicate with OS implementation module S200. In some embodiments, API S190 allows multiple API-calling modules written in different programming languages to communicate with OS implementation module S200 (e.g., API S190 can include features for translating calls and returns between OS implementation module S200 and API-calling module S180) while API S190 is implemented in terms of a specific programming language. In some embodiments, API-calling module S180 calls APIs from different providers such as a set of APIs from an OS provider, another set of APIs from a plug-in provider, and/or another set of APIs from another provider (e.g., the provider of a software library) or creator of the another set of APIs.

Examples of API S190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device S150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, OS implementation module S200 is an operating system software module (e.g., a collection of computer-readable instructions) that is constructed to perform an operation in response to receiving an API call via API S190. In some embodiments, OS implementation module S200 is constructed to provide an API response (via API S190) as a result of processing an API call. By way of example, OS implementation module S200 and API-calling module 180 can each be any one of an operating system, a library, a device driver, an API, an application program, or other module. It should be understood that OS implementation module S200 and API-calling module S180 can be the same or different type of module from each other. In some embodiments, OS implementation module S200 is embodied at least in part in firmware, microcode, or other hardware logic.

In some embodiments, OS implementation module S200 returns a value through API S190 in response to an API call from API-calling module S180. While API S190 defines the syntax and result of an API call (e.g., how to invoke the API call and what the API call does), API S190 might not reveal how OS implementation module S200 accomplishes the function specified by the API call. Various API calls are transferred via the one or more application programming interfaces between API-calling module S180 and OS implementation module S200. Transferring the API calls can include issuing, initiating, invoking, calling, receiving, returning, and/or responding to the function calls or messages. In other words, transferring can describe actions by either of API-calling module S180 or OS implementation module S200. In some embodiments, a function call or other invocation of API S190 sends and/or receives one or more parameters through a parameter list or other structure.

In some embodiments, OS implementation module S200 provides more than one API, each providing a different view of or with different aspects of functionality implemented by OS implementation module S200. For example, one API of OS implementation module S200 can provide a first set of functions and can be exposed to third party developers, and another API of OS implementation module S200 can be hidden (e.g., not exposed) and provide a subset of the first set of functions and also provide another set of functions, such as testing or debugging functions which are not in the first set of functions. In some embodiments, OS implementation module S200 calls one or more other components via an underlying API and thus be both an API calling module and an OS implementation module. It should be recognized that OS implementation module S200 can include additional functions, methods, classes, data structures, and/or other features that are not specified through API S190 and are not available to API calling module S180. It should also be recognized that API calling module S180 can be on the same system as OS implementation module S200 or can be located remotely and access OS implementation module S200 using API S190 over a network. In some embodiments, OS implementation module S200, API S190, and/or API-calling module S180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

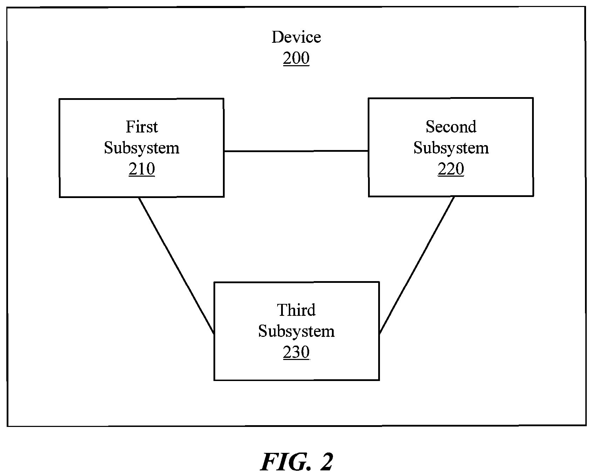

FIG. 2 illustrates a block diagram of device 200 with interconnected subsystems. In the illustrated example, device 200 includes three different subsystems (i.e., first subsystem 210, second subsystem 220, and third subsystem 230) communicating with (e.g., wired or wirelessly) each other, creating a network (e.g., a personal area network, a local area network, a wireless local area network, a metropolitan area network, a wide area network, a storage area network, a virtual private network, an enterprise internal private network, a campus area network, a system area network, and/or a controller area network). An example of a possible computer architecture of a subsystem as included in FIG. 2 is described in FIG. 1A (i.e., compute system 100). Although three subsystems are shown in FIG. 2, device 200 can include more or fewer subsystems.

In some embodiments, some subsystems are not connected to other subsystem (e.g., first subsystem 210 can be connected to second subsystem 220 and third subsystem 230 but second subsystem 220 cannot be connected to third subsystem 230). In some embodiments, some subsystems are connected via one or more wires while other subsystems are wirelessly connected. In some embodiments, messages are set between the first subsystem 210, second subsystem 220, and third subsystem 230, such that when a respective subsystem sends a message the other subsystems receive the message (e.g., via a wire and/or a bus). In some embodiments, one or more subsystems are wirelessly connected to one or more compute systems outside of device 200, such as a server system. In such examples, the subsystem can be configured to communicate wirelessly to the one or more compute systems outside of device 200.

In some embodiments, device 200 includes a housing that fully or partially encloses subsystems 210-230. Examples of device 200 include a home-appliance device (e.g., a refrigerator or an air conditioning system), a robot (e.g., a robotic arm or a robotic vacuum), and a vehicle. In some embodiments, device 200 is configured to navigate (with or without user input) in a physical environment.

In some embodiments, one or more subsystems of device 200 are used to control, manage, and/or receive data from one or more other subsystems of device 200 and/or one or more compute systems remote from device 200. For example, first subsystem 210 and second subsystem 220 can each be a camera that captures images, and third subsystem 230 can use the captured images for decision making. In some embodiments, at least a portion of device 200 functions as a distributed compute system. For example, a task can be split into different portions, where a first portion is executed by first subsystem 210 and a second portion is executed by second subsystem 220.

Attention is now directed towards techniques for accessing content. Such techniques are described in the context of accessing an application of a device that is in a locked and/or standby state. It should be recognized that the application can be accessed in other states with techniques described herein. For example, a first application of a device can be accessed while displaying a user interface of a second application of the device using techniques described herein. In addition, techniques optionally complement or replace other techniques for accessing content.

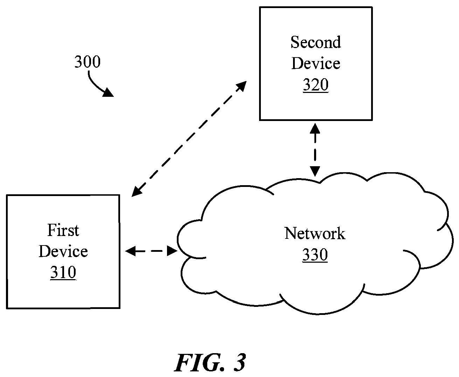

FIG. 3 is a block diagram illustrating a network environment in accordance with some embodiments. As illustrated in FIG. 3, network environment 300 includes first device 310 and second device 320. It should be recognized that network environment 300 can include additional devices than those illustrated. In some embodiments, one or more devices in FIG. 3 include one or more components described above with respect to compute system 100 and/or device 200.

As illustrated in FIG. 3, first device 310 and second device 320 are communicatively coupled to each other directly via a peer-to-peer channel and/or indirectly via network 330. In some embodiments, using the peer-to-peer connection, first device 310 and second device 320 communicate directly with each other in a decentralized manner, without the need for a central server, router, and/or switch. Some examples of communication protocols used for the peer-to-peer connection include near field communication (NFC), Bluetooth, Zigbee, Wi-Fi Direct, Z-wave, and Infrared (IR). In some embodiments, using network 330, first device 310 and second device 320 communicate through another device in a centralized manner, using a central server, router, and/or switch. For example, network 330 can be an interconnected network of devices that includes, or is communicatively coupled to, the Internet and/or another type of network. Examples of network 330 include a Wide Area Network (WAN), a Metropolitan Area Network (MAN), a Local Area Network (LAN), a Wireless Local Area Network (WLAN), a Cellular Network, a Public Switched Telephone Network (PSTN), a Voice over Internet Protocol (VoIP) Network, an Internet Protocol (IP) Network, Satellite Network, a Client-Server Network, an Internet of Things (IoT) Network, and a Cloud Computing Network. It should be recognized that either, both, and/or other techniques for communicating can be used with techniques described herein.

In some embodiments, first device 310 and/or second device 320 is a smart phone, a smart watch, a fitness tracking device, a laptop, a desktop, a tablet, and/or a television. As mentioned above, first device 310 and second device 320 can communicate with each other directly through the peer-to-peer connection and/or directly via networks 330. Such communication can include an exchange or transmission of data, such as a digital profile, text, a widget, an application, an animation, an emoji, a representation of a user, a document, calendar information, personally-identifiable information, a file, an image, video, and/or audio. In some embodiments, such communication includes a remote access connection. For example, the remote access connection can allow first device 310 to access and/or control an application and/or an environment of second device 320. After first device 310 is granted access and/or control to the application and/or the environment of second device 320, first device 310 can have access to one or more applications of second device 320 and/or data associated with the one or more applications of second device 320.

Attention is now directed towards techniques for enabling a remote access connection between multiple devices. Such techniques are described in the context of a personal device of a user initiating a remote session with another personal device of the user. It should be recognized that other contexts and/or other types of electronic devices can be used with techniques described herein. For example, a multi-user device and/or a device that does not belong to and/or is not associated with a user can be used with techniques described herein. In addition, techniques optionally complement or replace other techniques for enabling a remote access connection between devices.

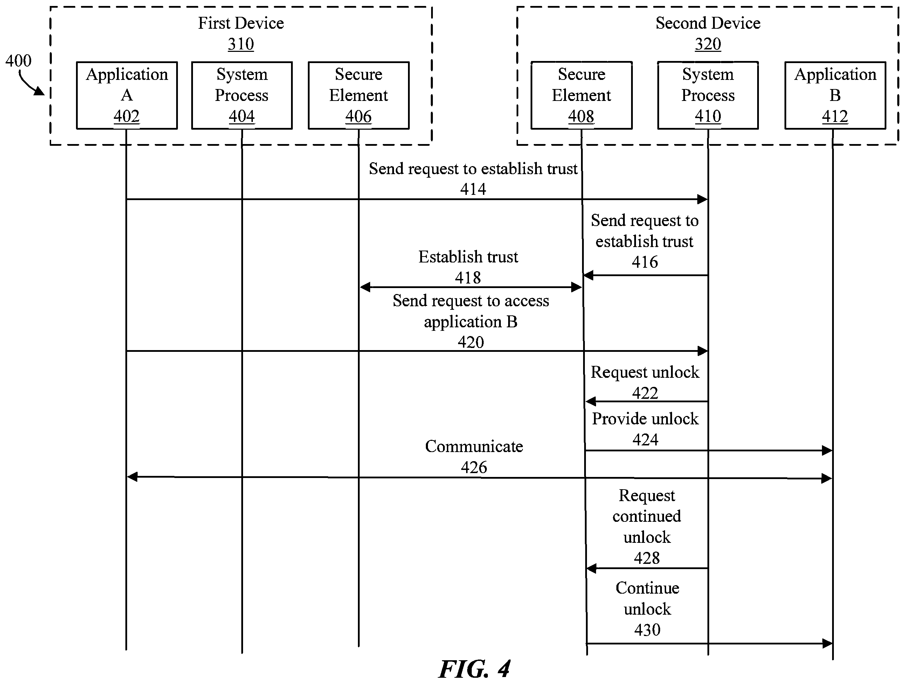

FIG. 4 is a swim-lane diagram illustrating a process for participating in a remote access connection in accordance with some embodiments. As illustrated in FIG. 4, process 400 is performed by first device 310 and second device 320.

As illustrated in FIG. 4, first device 310 includes application A 402, system process 404, and secure element 406. In some embodiments, application A 402 is a remote access application that allows first device 310 to participate in a remote access connection with second device 320. For example, application A 402 can enable first device 310 to remotely access an application of second device 320. For another example, application A 402 can display one or more user interfaces received from an application of second device 320. In some embodiments, system process 404 is a process of an operating system of first device 310 that can perform one or more functions such as managing a layout of a home screen, launching an application, handling a system alert, controlling a lock screen, managing storage, handling networking, and/or managing security of first device 310. In some embodiments, secure element 406 provides security for first device 310. For example, secure element 406 can manage cryptographic material, isolate sensitive data from other components of first device 310, and/or facilitate authentication. In some embodiments, secure element 406 generates and/or stores one or more keys used for encrypting and/or decrypting data and/or generating signatures. In some embodiments, the one or more keys stored on secure element 406 are never directly exposed to application A 402 and/or system process 404. In some embodiments, secure element 406 is responsible for processing user authentication data such as biometric data (e.g., facial recognition data, voice recognition data, and/or fingerprint data). In some embodiments, secure element 406 assists in securing data created and/or used by applications and/or ensuring that the data is only accessible by authorized applications. In some embodiments, secure element 406 is a hardware component such as a processor and/or memory. In some embodiments, secure element 406 is software component and/or a combination of a hardware component and a software component. It should be recognized that first device 310 can include more, fewer, and/or different components than illustrated in FIG. 4.

As illustrated in FIG. 4, second device 320 includes secure element 408, system process 410, and application B 412. In some embodiments, secure element 408 performs the same or similar functions as described above with respect to secure element 406. In some embodiments, system process 410 performs the same or similar functions as described above with respect to system process 404. In some embodiments, application B 412 of second device 320 is an application that performs one or more operations such as data processing, playing media, interacting via social networks, and/or managing user information such as health information. In some embodiments, application B 412 provides one or more user interfaces through which a user can interact with application B 412 to input and/or access data. In some embodiments, application B 412 implements security measures to secure data. In some embodiments, application B 412 allows other devices to remotely access functionality of application B 412. For example, application B 412 can render user interfaces for display and interaction by other devices (e.g., first device 310). It should be recognized that second device 320 can include more, fewer, and/or different components than illustrated in FIG. 4.

Beginning process 400, application A 402 detects user input to register with second device 320. At 414, as part of registering, application A 402 sends a request to second device 320 to establish trust between first device 310 and second device 320. In some embodiments, the request is sent via system process 404 and/or secure element 406. For example, the request can be encrypted by secure element 406 and sent to system process 410 by system process 404. In such embodiments, system process 410 can receive the request and determine whether to establish trust with first device 310. For example, system process 410 can determine whether first device 310 and second device 320 are logged into the same user account and/or whether a user of second device 320 approves establishing trust with first device 310.

At 416, in response to determining to establish trust with first device 310, system process 410 sends a request to secure element 408 to establish trust with first device 310. At 418, secure element 408 establishes trust with secure element 406. In some embodiments, secure element 408 and secure element 406 communicate directly to establish trust, such as to authenticate each other and/or provide one or more secrets for communication. For example, secure element 408 can generate a secret (such as a public key, a private key, and/or a symmetric key) and send at least a portion of the secret (e.g., the public key) to secure element 406 to be stored at first device 310 by secure element 406. Similarly, secure element 406 can generate a secret (such as a public key, a private key, and/or a symmetric key) and send at least a portion of the secret (e.g., the public key) to secure element 408 to be stored at second device 320 by secure element 408. In some embodiments, the secret can be used to encrypt, decrypt, and/or sign communications. It should be recognized that other processes to register first device 310 and second device 320 are within the scope of this disclosure and that such description above is intended to provide some illustrative embodiments.

In some embodiments, after establishing trust with second device 310, application A detects user input to access application B 412. It should be recognized that application B 412 is used as an example and that application A 402 can be used to access one or more applications of second device 320 other than application B 412. At 420, in response to detecting the user input to access application B 412, application A 402 sends a request to system 410 to access application B 412. In some embodiments, the request is sent via system process 404 and/or secure element 406. For example, the request can be encrypted by secure element 406 and sent to system process 410 by system process 404. In some embodiments, second device 320 is in a locked and/or standby state while receiving the request to access application B 412. In such embodiments, application B 412 and/or data corresponding to application B 412 can be locked and/or encrypted such that access to application B 412 requires secure element 408 to allow access. In some embodiments, an embedded display of second device 320 is in an off, locked, and/or standby state while second device 320 is in the locked and/or standby state. For example, the embedded display can be displaying a lock screen that requires a particular set of one or more inputs and/or user authentication to be dismissed.

In some embodiments, different instances of the same system process (e.g., system process 410) are used when interacting with second device 320 via the embedded display of second device 320 and via application A 402. For example, in response to receiving the request to access application B 420, second device 320 can initiate a duplicate copy of system process 410 for simulating an unlocked state for application B 412 while another copy of system process 410 manages the off, locked, and/or standby state of the embedded display of second device 320. In some embodiments, the duplicate copy of system process 410 is used for different applications that are unlocked similar to application B 412 as described herein regardless of which other device is requesting. In other embodiments, the duplicate copy of system process 410 is used for application A 402 to access different applications that are unlocked similar to application B 412 as described herein. In other embodiments, additional copies of system process 410 are used for each application that is unlocked and/or each device that is requesting that an application be unlocked similar to application B 412 as described herein.

In some embodiments, in response to receiving the request to access application B 412, system process 410 determines whether to request secure element 408 to unlock application B 412. For example, system process 410 can determine to request secure element 308 to unlock application B 412 when second device 320 is not currently being directly used (e.g., a set of one or more inputs detected via an input device of second device 320 does not exceed a threshold), not on a call with another device, in a locked and/or standby state, not unlocked, within a predefined distance of first device 310, in communication with first device 310 via a particular communication technology (e.g., a peer-to-peer connection), not executing a particular operation (e.g., streaming music, capturing audio content, and/or capturing image content), and/or other criteria to ensure that second device 320 is in a state to allow access to application B 412. At 420, in response to determining to request secure element 408 to unlock application B 412, system process 410 requests that secure element 408 unlock application B 412.

At 424, in response to receiving the request to unlock application B 412, secure element 308 unlocks application B 412. In some embodiments, unlocking application B 412 includes decrypting and/or providing access to data and/or one or more keys associated with application B 412 without unlocking the embedded display of second device 320. In such embodiments, second device 320 can still require a user to authenticate via an input device of second device 320 before accessing application 412 via the embedded display of second device 320. It should be recognized that unlocking application B 412 can be different than unlocking second device 320 in that (1) the embedded display of second device 320 does not display a user interface rendered by application B 412 and sent to application A 402 and/or (2) a lock screen can be maintained in the case of unlocking application B 412 rather than displaying another user interface (e.g., a home screen and/or a user interface of an application, such as application B 412) in the case of unlocking second device 320. It should also be recognized that second device 320 can display a user interface and/or a user interface element while second device 320 is in a locked and/or standby state. For example, a lock screen of second device 320 can include a widget and/or other user interface element that corresponds to and/or includes information from application B 412. In such an example, second device 320 needs to be unlocked before displaying further user interfaces of application B 312 via the embedded display of second device 320.

At 426, application B 412 communicates with application A 402. In some embodiments, such communication is sent via system process 410, secure element 408, system process 404, and/or secure element 406. For example, application B 412 can render a user interface that is encrypted by secure element 408 and sent to application A 402 by system process 410 via system process 404. For another example, application A 402 can detect a user input corresponding to a user interface rendered by application B 412 and send an indication of the user input to application B 412 to process. In some embodiments, user interfaces capable of being and/or configured to be rendered by application B 412 in a particular orientation are forced to be in the particular orientation (e.g., portrait orientation) whenever sent to application A 402, regardless of whether the user interfaces are capable of being and/or configured to be rendered in another orientation and/or whether second device 320 is in an orientation to cause user interfaces displayed by the embedded display of second device 320 to be in the particular orientation. In such embodiments, user interfaces not capable and/or configured to be rendered in the particular orientation can be rendered in another orientation and sent to application A 402. In other embodiments, user interfaces sent to application A 402 are rendered by application B 412 in an orientation of first device 310. In other embodiments, user interfaces sent to application A 402 are rendered by application B 412 in an orientation of second device 320. In some embodiments, the embedded display of second device 320 remains in an off, locked, and/or standby state while application B 412 and application A 402 communicate.

In some embodiments, system process 410 and/or another process of second device 320 stops communication between application B 412 and application A 402 whenever requested by first device 310 (e.g., application A 402, system process 404, and/or another process of first device 310) and/or second device 310 (e.g., application B 412, system process 410, and/or another process of second device 310), causing secure element 408 to lock application B 412 (e.g., encrypting and/or denying access to data and/or one or more keys associated with application B 412). For example, first device 310 or second device 320 can detect user input to stop communication between application B 412 and application A 402. For another example, secure element 408 can be configured to allow application B 412 to be unlocked for a predefined period of time unless secure element 408 receives a request from system process 410 for application B 412 to continue to be unlocked (sometimes referred to as continued unlock, as illustrated at 428 and 430) before the predefined period of time expires. In such an example, secure element 408 might only allow such a request for continued unlock to be successful while second device 320 is in a locked and/or standby state when application B 412 is unlocked for communicating with application A 402 and not when unlocked for another purpose (e.g., unlocked to communicate with a server and/or to perform an operation as a background process). In some embodiments, the continued unlock request allows for application B 412 to be unlocked for another predefined period of time (e.g., the same, shorter, or longer than the predefined period of time).

In some embodiments, while application B 412 communicates with application A 402, user interfaces sent to application A 402 (e.g., at least partially rendered by application B 412) include a user interface element that does not correspond to application B 412. For example, the user interface element can correspond to a live activity being performed by another application of second device 320. In some embodiments, the user interface element can be included in user interfaces sent to application A 402 when it is determined that a user is interacting with first device 310 rather than second device 320. In such embodiments, the user interface element can be included in a user interface (e.g., a lock screen) displayed by the embedded display of second device 320 (e.g., instead of in a user interface sent to application A 402) when it is determined that a user is interacting with second device 320, such as when second device 320 detects user input via an input device of second device 320.

As mentioned above, secure element 406 and secure element 408 establish trust with each other. For example, such trust can include secure element 408 generating a secret and sending at least a portion of the secret to secure element 406. In some embodiments, secure element 408 generates a new secret each time application A 402 establishes a remote access connection with second device 320. In such embodiments, the new secret can be used for a subsequent remote access connection such that a previous secret is no longer valid after the remote access connection is terminated. In some embodiments, either secure element 406 or secure element 408 is able to permanently and/or temporarily invalidate a secret. For example, secure element 406 can permanently and/or temporarily invalidate a secret to be used to connect with second device 320 when secure element 406 detects that first device 310 is locked, first device 310 is not successfully authenticated via a user (e.g., as a result of multiple failed attempts), first device 310 and/or second device 320 is placed in a lost mode (e.g., a mode which designates that a device is no longer in the possession of an authorized user), and/or first device 310 is restarted. Similarly, secure element 408 can permanently and/or temporarily invalidate a secret to be used to connect with application A 402 when secure element 408 detects that second device 320 is not successfully authenticated via a user, first device 310 and/or second device 320 is placed in a lost mode, and/or second device 320 is restarted. In some embodiments, an invalidated secret cannot be used to establish a connection between application A 402 and second device 320. In some embodiments a temporarily invalidated secret can be re-validated in response to a device being unlocked and/or successfully authenticated via a user. For example, if a secret stored by secure element 406 is temporarily invalidated, the secret can be re-validated in response to first device 310 being unlocked and/or successfully authenticated via a user. This authentication can include biometric authentication (e.g., facial recognition, voice recognition, and/or fingerprint identification), password authentication, and/or MFA. It should be recognized that other types of authentication are within the scope of this disclosure, and the embodiments described above are intended to provide some illustrative embodiments.

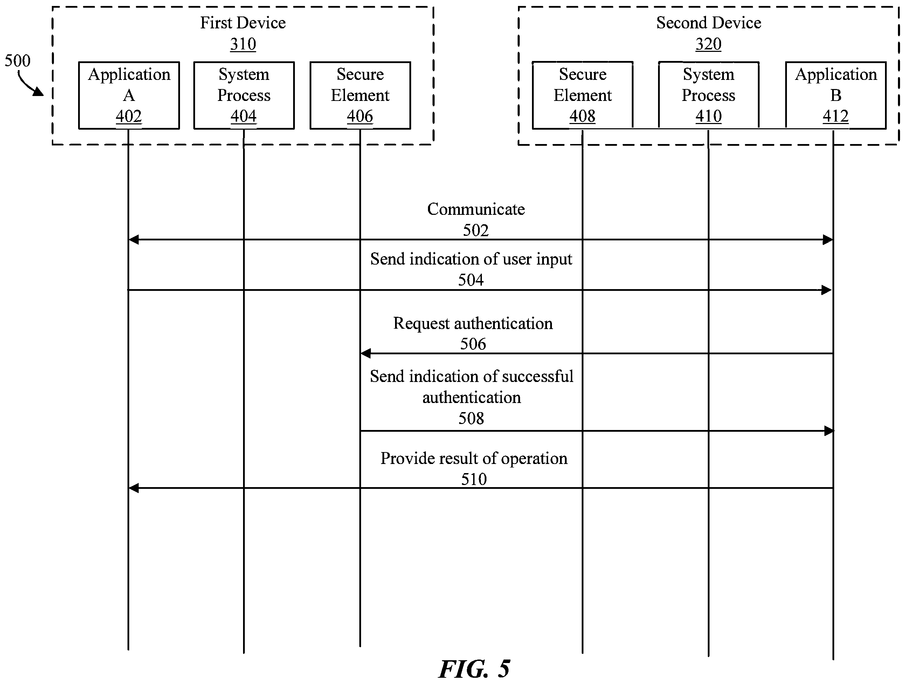

FIG. 5 is a swim-lane diagram illustrating a process for remote authentication in accordance with some embodiments. As illustrated in FIG. 5, process 500 is performed by first device 310 and second device 320.

At 502, application A 402 is communicating with application B 412, such as described above with respect to FIG. 4. In some embodiments, such communication includes application B 412 sending one or more user interfaces rendered by application B 412 to application A 402 via system process 410, secure element 408, system process 404, and/or secure element 406. For example, application A 402 can render a user interface that is encrypted by secure element 408 and sent to application A 402 by system process 410 via system process 404.

In some embodiments, application A 402 detects user input corresponding to a user interface rendered by application B 412. At 504, in response to detecting the user input, application A 402 sends an indication of the user input to application B 412. In some embodiments, the indication is sent via system process 404 and/or secure element 406. For example, the indication can be encrypted by secure element 406 and sent to application B 412 from system process 410 by system process 404.

In some embodiments, application B 412 receives the indication while the embedded display of second device 320 is in an off, standby, and/or locked state and application B 412 is in an unlocked state. In such embodiments, application B 412 can determine whether the input corresponds to a request to perform an operation that requires authentication via a user (sometimes referred to as a secure operation). In some embodiments, different operations require and/or allow different types of authentication, such as biometric authentication, password authentication, MFA authentication, and/or remote authentication. In such embodiments, application B 412 can be configured to determine which type of authentication is required. In some embodiments, while the embedded display of second device 320 is in an off, standby, and/or locked state, application B 412 denies any operation that requires authentication by second device 320. In other embodiments, while the embedded display of second device 320 is in an off, standby, and/or locked state, application B 412 allows authentication by second device 320 (e.g., secure element 408 and/or another process) when an operation requires authentication by second device 320.

At 506, in response to determining that the user input corresponds to an operation that allows for remote authentication by first device 310, application B 412 requests that first device 310 perform authentication, such as biometric authentication, password authentication, and/or MFA authentication. In some embodiments, application B 412 requests that first device 310 perform authentication via system process 410 and/or secure element 408. For example, secure element 408 can communicate with secure element 406 to authenticate a user via first device 310.

At 508, in response to successful authenticating a user, secure element 406 sends an indication that authentication has been successful to application B 412. In some embodiments, in response to receiving the indication that authentication has been successful, application B 412 performs the operation corresponding to the user input (e.g., without performing authentication of a user via an input device of second device 320). At 510, application B 412 provides a result of performing the operation to application A 402. In some embodiments, the result includes a new user interface to be displayed by application A 402.

FIG. 6 is a flow diagram illustrating a method (e.g., method 600) for remote access while locked in accordance with some embodiments. Some operations in method 600 are, optionally, combined, the orders of some operations are, optionally, changed, and some operations are, optionally, omitted.

As described below, method 600 provides an intuitive way for remote access while locked. Method 600 reduces the cognitive burden on a user, thereby creating a more efficient human-machine interface. For battery-operated computing devices, enabling a user to interact with such devices faster and more efficiently conserves power and increases the time between battery charges.

In some embodiments, method 600 is performed at a first device (e.g., a watch, a phone, a tablet, a fitness tracking device, a processor, a head-mounted display (HMD) device, a communal device, a media device, a speaker, a television, and/or a personal computing device) (e.g., 320). In some embodiments, one or more operations described below are performed by a system process (e.g., a process of an operating system) (e.g., 410) of the first device. In some embodiments, one or more operations described below are performed by an application (e.g., 412) of the first device. In some embodiments, one or more operations described below are performed by a security element (e.g., 408) of the first device.

While (602) the first device is in a locked state (e.g., a screen locked state, a device lock state, access to one or more applications being limited, and/or communication between applications being limited), the first device receives (604), from a second device (e.g., a watch, a phone, a tablet, a fitness tracking device, a processor, a head-mounted display (HMD) device, a communal device, a media device, a speaker, a television, and/or a personal computing device) (e.g., 310, 402, 404, and/or 406) different from the first device, a request (e.g., 420) to remotely access (e.g., obtain, display, and/or otherwise interact with) a first application (e.g., a user application, such as a calculator application, a word processing application, a media application, and/or a communication application) (e.g., 412) of (e.g., installed and/or executing on) the first device (e.g., without detecting user input (e.g., a selection input and/or a non-selection input) via the first device). In some embodiments, the request to remotely access the first application of the first device is a request to remotely access the first device. In some embodiments, the second device is logged into the same user account as the first device. In some embodiments, a selection input includes a tap input, a verbal input, an audible command, a gaze input, an air gesture, a mouse click, and/or a submission of a user-interface element and/or a physical hardware element. In some embodiments, a non-selection input includes a verbal input, an audible request, an audible command, an audible statement, a swipe input, a hold-and-drag input, a gaze input, an air gesture, and/or a mouse movement. In some embodiments, the first device being in the locked state includes the first device displaying a lock screen and/or other user interface corresponding to the locked state. In some embodiments, the first device being in the locked state includes the first device turning off and/or limiting use (e.g., a rate of detection) one or more input devices (e.g., a camera, a depth sensor, a microphone, a hardware input mechanism, a rotatable input mechanism, a heart monitor, a temperature sensor, and/or a touch-sensitive surface) of and/or in communication with the first device. In some embodiments, the first device includes and/or is in communication with a display generation component (e.g., a display screen, a projector, a head mounted display, and/or a touch-sensitive display). In some embodiments, the first device being in the locked state includes the first device reducing brightness of the display generation component.

While (602) the first device is in the locked state, in response to (606) receiving the request to remotely access the first application of the first device, in accordance with a determination that a first set of one or more criteria (e.g., as described above with respect to FIG. 4) is satisfied (e.g., the second device is nearby to the first device, the first device is in the locked state, and/or the second device is logged into the same user account as the first device), the first device sends (608), to the second device, a first user interface (e.g., as described above with respect to 426) of the first application, wherein the first user interface is rendered by the first device. In some embodiments, in response to receiving the request to remotely access the first application of the first device and in accordance with the determination that the first set of one or more criteria is satisfied, the first device initiates a remote access session with the second device. In some embodiments, the first device has less functionality while in the locked state than while in an unlocked state (e.g., the first device does not allow one or more user interfaces (e.g., the first user interface) to be displayed (e.g., via the display generation component and/or by the first device) while in the locked state).

While (602) the first device is in the locked state, in response to (606) receiving the request to remotely access the first application of the first device, in accordance with a determination that the first set of one or more criteria is not satisfied (e.g., the second device is not nearby to the first device, the first device is not in the locked state, and/or the second device is logged into a different user account than the first device) (e.g., as described above with respect to FIG. 4), the first device forgoes (610) sending, to the second device, the first user interface of the first application. In some embodiments, in response to receiving the request to remotely access the first application of the first device and in accordance with the determination that the first set of one or more criteria is not satisfied, the first device forgoes initiating a remote access session with the second device.

In some embodiments, the first device is in communication with a display generation component (e.g., a display screen, a projector, a head mounted display, and/or a touch-sensitive display). In some embodiments, the display generation component is an embedded display of the first device. In some embodiments, while (and/or in conjunction with, such as before or after) sending, to the second device, the first user interface of the first application (and/or while the first device is in the locked state), the first device displays, via the display generation component, a second user interface (e.g., a lock screen) corresponding to the locked state, wherein the first user interface of the first application is different from the second user interface corresponding to the locked state. In some embodiments, the second user interface includes an indication of a current time and/or date. In some embodiments, the second user interface includes a representation (e.g., an icon and/or a widget) of the first application. In some embodiments, the second user interface does not include a representation or an indication corresponding to the first application.

In some embodiments, while the first device is in the locked state and in response to receiving the request to remotely access the first application of the first device, the first device unlocks (e.g., decrypts and/or provides remote access to) a set of one or more keys (e.g., a key bag) stored by the first device. In some embodiments, the set of one or more keys are stored at the first device. In some embodiments, the set of one or more keys are stored at location different than the first device.

In some embodiments, the device is in communication with (and/or includes) one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, while the first device is in the locked state and after sending, to the second device, the first user interface of the first application, the first device detects, via the one or more input devices, an input (e.g., a selection input and/or a non-selection input) corresponding to a request to unlock the first device. In some embodiments, in response to detecting the input corresponding to the request to unlock the first device, the first device transitions the first device from the locked state to an unlocked state (e.g., a home screen, a device unlock state, access to one or more applications not being limited, and/or communication between applications not being limited) (e.g., unlocks the first device). In some embodiments, the first device being in the unlocked state includes the first device displaying a home screen and/or other user interface corresponding to the unlocked state. In some embodiments, while the first device is in the unlocked state, the first device has access to more content and/or functionality than while in the locked state.

In some embodiments, after sending, to the second device, the first user interface of the first application, the first device receives, from the second device, an input (e.g., a selection input and/or a non-selection input) corresponding to (e.g., directed to, associated with, and/or with respect to) the first user interface. In some embodiments, the input corresponding to the first user interface is a touch input, a voice input, and/or an air gesture detected by the second device. In some embodiments, the input corresponds to a user interface element of the first user interface. In some embodiments, in response to receiving the input corresponding to the first user interface, the first device provides (and/or sends), to the first application, the input corresponding to the first user interface while maintaining the first device in the locked state. In some embodiments, maintaining the first device in the locked state includes displaying and/or maintain display of a lock screen while providing the input corresponding to the first user interface to the first application (e.g., the first application is in an unlocked state).

In some embodiments, the first device is in communication with (and/or includes) one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, after sending, to the second device, the first user interface of the first application, the first device detects, via the one or more input devices, a set of one or more inputs (e.g., a selection input and/or a non-selection input) including an input (e.g., a selection input and/or a non-selection input) detected while the first device is in the locked state. In some embodiments, the set of one or more inputs does not include an input corresponding to a request to terminate the remote access session. In some embodiments, in response to receiving the request to remotely access the first application of the first device, the first device initiates the remote access session. In some embodiments, in response to detecting the set of one or more inputs, in accordance with a determination that a second set of one or more criteria, different from the first set of one or more criteria, is satisfied (e.g., that the set of one or more inputs satisfy the second set of one or more criteria, such that (1) a number and/or intensity of the set of one or more inputs exceeds a threshold and/or (2) the set of one or more inputs includes an input of a first type, such as an unlocking input), the first device terminates (e.g., stops and/or ceases) a remote access session corresponding to the request to remotely access the first application of the first device. In some embodiments, terminating the remote access session includes ceasing sending, to the second device, one or more user interfaces of the first application and/or ceasing responding to requests, from the second device, corresponding to the first application. In some embodiments, in response to detecting the set of one or more inputs, in accordance with a determination that a third set of one or more criteria, different from the first set of one or more criteria and the second set of one or more criteria, is satisfied (e.g., that the second set of one or more criteria is not satisfied), the first device maintains (e.g., continues and/or does not terminate) the remote access session. In some embodiments, maintaining the remote access session includes continuing to send, to the second device, one or more user interfaces (e.g., the first user interface and/or another user interface different from the first user interface) of the first application and/or continuing to respond to requests, from the second device, corresponding to the first application.

In some embodiments, while a first instance (e.g., a copy of code) of a system process (e.g., 410) of the first device is executing, in response to receiving the request to remotely access the first application of the first device, and in accordance with the determination that the first set of one or more criteria is satisfied (e.g., and while sending, to the second device, the first user interface of the first application), the first device initiates a second instance of the system process, wherein the second instance is separate from the first instance. In some embodiments, the first instance of the system process and the second instance of system process are copies of code running separately. In some embodiments, the system process is managed by, part of, and/or executing on behalf of an operating system of the first device. In some embodiments, the system process facilitates communication between one or more applications on the first device and one or more hardware components of the first device. In some embodiments, the system process facilitates secure processes and/or hardware-based processes (e.g., processes active while the first device is locked and/or processes seeking to access a hardware component of the first device). In some embodiments, while the first instance of the system process of the first device is executing, in response to receiving the request to remotely access the first application of the first device, and in accordance with the determination that the first set of one or more criteria is not satisfied, the first device forgoes initiation of the second instance of the system process.

In some embodiments, after initiating the second instance of the system process, the first device receives, from the second device (and/or another device different from the second device), a request to remotely access a second application of the first device, wherein the second application is different from the first application. In some embodiments, in response to receiving the request to remotely access the second application of the first device, in accordance with a determination that a second set of one or more criteria is satisfied (e.g., the second device or the other device is nearby to the first device, the first device is in the locked state, and/or the second device or the other device is logged into the same user account as the first device), the first device initiates a third instance of the system process, wherein the third instance is separate from the first instance and the second instance (e.g., while the first instance and/or the second instance is executing). In some embodiments, in response to receiving the request to remotely access the second application of the first device and in accordance with the determination that the second set of one or more criteria is satisfied, the first device sends, to the second device, a third user interface of the second application. In some embodiments, the third user interface is rendered by the first device. In some embodiments, in response to receiving the request to remotely access the second application of the first device, in accordance with a determination that the second set of one or more criteria is not satisfied (e.g., the second device or the other device is not nearby to the first device, the first device is in unlocked state, and/or the second device or the other device is not logged into the same user account as the first device), the first device forgoes initiating the third instance of the system process. In some embodiments, in response to receiving the request to remotely access the second application of the first device and in accordance with a determination that the second set of one or more criteria is not satisfied, the first device forgoes sending, to the second device, the third user interface of the second application.

In some embodiments, the first device is in communication with (and/or includes) a display generation component (e.g., a display screen, a projector, a head mounted display, and/or a touch-sensitive display). In some embodiments, the first device displays, via the display generation component and the first instance of the system process, a user interface element (e.g., a widget and/or content) of the first application, wherein the user interface element corresponds to (e.g., is displayed and/or rendered by) a first instance of the first application. In some embodiments, the user interface element includes real-time and/or non-real-time information and/or data. In some embodiments, the user interface element includes data that corresponds to one or more metrics that has been calculated within a predetermined amount of time. In some embodiments, the user interface element includes data calculated and/or displayed at certain time intervals. In some embodiments, the user interface element includes a control that, when selected, causes a user interface corresponding to the first application to be displayed. In some embodiments, the user interface corresponding to the first application includes one or more portions of real-time and/or non-real time information and/or data. In some embodiments, while displaying the user interface element of the first application (and/or before sending, to the second device, the first user interface of the first application), the first device renders (e.g., generates, such as by a rendering component, without displaying), via the first instance of the first application and the first instance of the system process, the first user interface of the first application (e.g., the same instance of the first application is used to render the first user interface as is used to display the user interface element while different instances of the system process is used to render the first user interface as is used to display the user interface element).

In some embodiments, the first device includes an embedded display generation component (e.g., a display screen, a projector, a head mounted display, and/or a touch-sensitive display). In some embodiments, the embedded display generation component is in an off state while the first device sends, to the second device, the first user interface of the first application (and/or while the first devices receives the request to remotely access the first application of the first device and/or while the first device renders the first user interface). In some embodiments, the first device is not in communication with a display generation component (e.g., a display screen, a projector, a head mounted display, and/or a touch-sensitive display) that is in an on state while the first device sends, to the second device, the first user interface of the first application, while the first devices receives the request to remotely access the first application of the first device, and/or while the first device renders the first user interface.

In some embodiments, the first device is in communication with a display generation component (e.g., a display screen, a projector, a head mounted display, and/or a touch-sensitive display). In some embodiments, the display generation component is configured to output content in a first orientation (e.g., landscape, horizontal, portrait and/or vertical) (e.g., in conjunction with sending, to the second device, the first user interface of the first application). In some embodiments, the first user interface of the first application has a second orientation different from the first orientation (e.g., the first user interface was rendered and sent in a different orientation than the display generation component was configured to output content).

In some embodiments, after sending, to the second device, the first user interface of the first application, the first device receives, from the second device, a request for a third user interface, different from the first user interface of the first application, while the display generation component is configured to output content in a first orientation, wherein the first user interface has a second orientation different from the first orientation. In some embodiments, the request for the third user interface is a request for a change in an orientation of the first user interface. In some embodiments, the request for the third user interface is a request for a user interface that is required to be in a different orientation than the second orientation. In some embodiments, in response to receiving the request for the third user interface, the first device sends to the second device, the third user interface of the first application, wherein the third user interface has a third orientation (e.g., the first orientation or an orientation different from the first orientation and the second orientation) different from the second orientation. In some embodiments, the third user interface is rendered having the third orientation without detecting a change in orientation (e.g., of the first device and/or the second device) since rendering and/or sending the first user interface.

In some embodiments, the first device is in communication with a display generation component (e.g., a display screen, a projector, a head mounted display, and/or a touch-sensitive display) and one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, after sending, to the second device, the first user interface of the first application, the first device detects, via the one or more input devices, an attention of a subject (e.g., a user of the first device and/or the second device, a person, an animal, another computer system different from the first device, a device, and/or an object). In some embodiments, in response to detecting the attention of the subject, in accordance with a determination that a third set of one or more criteria (e.g., different from the first set of one or more criteria and the second set of one or more criteria) is satisfied, wherein the third set of one or more criteria includes a criterion that is satisfied when the attention of the subject is determined to correspond to (e.g., be directed to and/or associated with) the first device (e.g., the attention of the subject of the subject looking toward the first device exceeds a predetermined period of time) (e.g., instead of the second device), the first device displays, via the display generation component, a user interface element (e.g., a user interface element which that includes a set of one or more controls and/or system information) without including the user interface element in a user interface sent to the second device. In some embodiments, in response to detecting the attention of the subject, in accordance with a determination that a fourth set of one or more criteria, different from the third set of one or more criteria (and/or the first set of one or more criteria and/or the second set of one or more criteria), is satisfied, wherein the fourth set of one or more criteria includes a criterion that is satisfied when the attention of the subject is determined to correspond to the second device (e.g., instead of the first device), the first device sends, to the second device, a user interface including the user interface element without displaying, via the display generation component, the user interface element.

In some embodiments, after sending, to the second device, the first user interface of the first application, the first device receives, from the second device, an indication (e.g., 504) of an input (e.g., a selection input and/or a non-selection input) corresponding to (e.g., directed to, at a location of, related to, and/or associated with) the first user interface. In some embodiments, the indication of the input corresponding to the first user interface includes selection of a button, control, and/or toggle at the first user interface that corresponds to an operation of the first application. In some embodiments, in response to receiving the indication of the input corresponding to the first user interface, in accordance with a determination that the indication of the input corresponds to a first operation of the first application, the first device causes (e.g., 506) the second device to perform an authentication (e.g., for the first operation). In some embodiments, the first operation requires authentication to be performed. In some embodiments, the authentication includes knowledge-based, possession-based, biometric, and/or multifactor authentication. In some embodiments, in response to receiving the indication of the input corresponding to the first user interface, in accordance with a determination that the indication of the input corresponds to a second operation different from the first operation, the first device forgoes causing the second device to perform the authentication. In some embodiments, the second operation does not require authentication to be performed. In some embodiments, the second operation does not allow authentication by a remote device (e.g., the second device). In some embodiments, in response to receiving the indication of the input corresponding to the first user interface and in accordance with the determination that the indication of the input corresponds to the second operation, the first device initiates the authentication (e.g., without causing the second device to perform the authentication). In some embodiments, initiating the authentication includes displaying, via a display generation component that is included in and/or in communication with the first device, a user interface corresponding to the authentication. In some embodiments, the user interface corresponding to the authentication is not displayed by the second device. In some embodiments, the second device displays another user interface different from the user interface corresponding to the authentication as part of performing the authentication. In some embodiments, the second device displays the user interface corresponding to the authentication as part of performing the authentication.

In some embodiments, in response to receiving the indication of the input corresponding to the first user interface and in accordance with the determination that the indication of the input corresponds to the second operation, the first device prevents (e.g., stops) the second operation from being performed (e.g., by the first application).

Note that details of the processes described above with respect to method 600 (e.g., FIG. 6) are also applicable in an analogous manner to other methods described herein. For example, method 700 optionally includes one or more of the characteristics of the various methods described above with reference to method 600. For example, the first device of method 700 is the first device of method 600. For brevity, these details are not repeated herein.

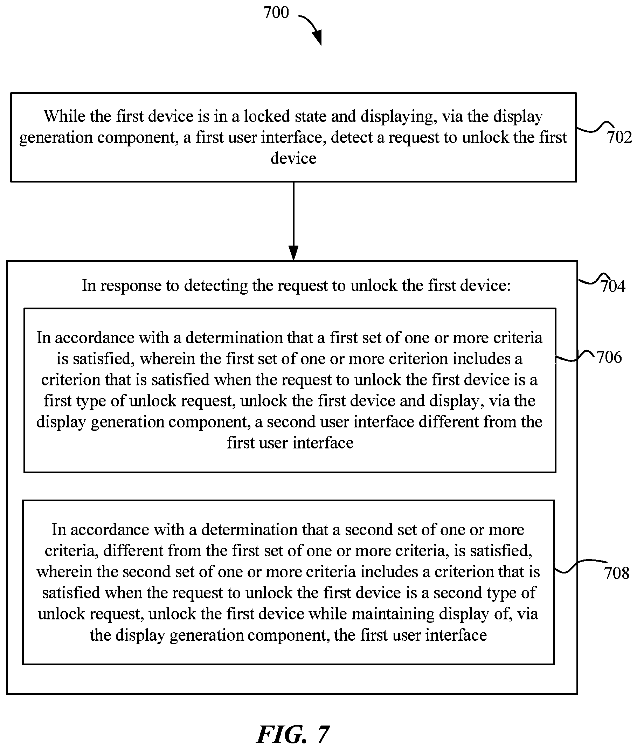

FIG. 7 is a flow diagram illustrating a method (e.g., method 700) for selectively ceasing display of a user interface in accordance with some embodiments. Some operations in method 700 are, optionally, combined, the orders of some operations are, optionally, changed, and some operations are, optionally, omitted.

As described below, method 700 provides an intuitive way for selectively ceasing display of a user interface. Method 700 reduces the cognitive burden on a user, thereby creating a more efficient human-machine interface. For battery-operated computing devices, enabling a user to interact with such devices faster and more efficiently conserves power and increases the time between battery charges.

In some embodiments, method 700 is performed at a first device (e.g., a watch, a phone, a tablet, a fitness tracking device, a processor, a head-mounted display (HMD) device, a communal device, a media device, a speaker, a television, and/or a personal computing device) (e.g., 320) that is in communication with a display generation component. In some embodiments, the display generation component includes a display screen, a projector, a head mounted display, and/or a touch-sensitive display. In some embodiments, one or more operations described below are performed by a system process (e.g., a process of an operating system) (e.g., 410) of the first device. In some embodiments, one or more operations described below are performed by an application (e.g., 412) of the first device. In some embodiments, one or more operations described below are performed by a security element (e.g., 408) of the first device.

While the first device is in a locked state (e.g., as described above with respect to method 600) and displaying, via the display generation component, a first user interface (e.g., a lock screen user and/or other user interface corresponding to the locked state), the first device detects (702) a request to unlock the first device (and/or change the first device from the locked state to an unlocked state different from the locked state). In some embodiments, while the first device is in the locked state, the first device displays, via the display generation component, a lock screen and/or other user interface corresponding to the locked state. In some embodiments, while the first device is in the locked state, the first device turns off and/or limits use (e.g., a rate of detection) of one or more input devices (e.g., a camera, a depth sensor, a microphone, a hardware input mechanism, a rotatable input mechanism, a heart monitor, a temperature sensor, and/or a touch-sensitive surface) and/or one or more output devices (e.g., the display generation component, an audio generation component, and/or a haptic generation component) of and/or in communication with the first device. In some embodiments, the audio generation component includes a speaker, a smart speaker, a home theater system, a soundbar, a headphone, an earphone, an earbud, a television, a speaker, an augmented reality headset speaker, an audio jack, an optical audio output, a Bluetooth audio output, and/or a HDMI audio output. In some embodiments, while the first device is in the locked state, the first device maintains an off or inactive state of the one or more input devices and/or the one or more output devices. In some embodiments, while the first device is in the locked state, the first device reduces brightness of the display generation component (e.g., as compared to when the first deice in in an unlocked state). In some embodiments, the first device being in the locked state includes the first device displaying a lock screen and/or other user interface corresponding to the locked state.

In response to (704) detecting the request to unlock the first device, in accordance with a determination that a first set of one or more criteria is satisfied, wherein the first set of one or more criterion includes a criterion that is satisfied when the request to unlock the first device is a first type of unlock request (e.g., the criterion of the first set of one or more criteria is satisfied when the request corresponds to an input (e.g., a selection input and/or a non-selection input) detected via one or more input devices of the first devices), the first device unlocks (706) the first device (e.g., changes the first device from operating in the locked state to operating in an unlocked state) and displaying, via the display generation component, a second user interface (e.g., device home screen and/or application home screen) different from the first user interface. In some embodiments, a selection input includes a tap input, a verbal input, an audible command, a gaze input, an air gesture, a mouse click, and/or a submission of a user-interface element and/or a physical hardware element. In some embodiments, a non-selection input includes a verbal input, an audible request, an audible command, an audible statement, a swipe input, a hold-and-drag input, a gaze input, an air gesture, and/or a mouse movement. In some embodiments, unlocking the first device includes decrypting a first portion of data stored by the first device. In some embodiments, unlocking the first device includes executing a process, such as an application process and/or a system process.

In response to (704) detecting the request to unlock the first device, in accordance with a determination that a second set of one or more criteria, different from the first set of one or more criteria, is satisfied, wherein the second set of one or more criteria includes a criterion that is satisfied when the request to unlock the first device is a second type of unlock request (e.g., the criterion of the second set of one or more criteria is satisfied when the request is received from another device different from the first device) (e.g., as described above with respect to 420), the first device unlocks (708) the first device while maintaining display of, via the display generation component, the first user interface. In some embodiments, the other computer system is a watch, a phone, a tablet, a fitness tracking device, a processor, a head-mounted display (HMD) device, a communal device, a media device, a speaker, a television, an electronic device, and/or a personal computing device.

In some embodiments, the first user interface is a lock screen (e.g., a user interface corresponding to the locked state).

In some embodiments, the second user interface includes a plurality of application icons (and/or one or more files, one or more folders, and/or one or more widgets). In some embodiments, each application icon of the plurality of application icons corresponds to a different application. In some embodiments, while displaying the plurality of applications icons, the first device detects, via one or more inputs devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) that is in communication with (and/or included in) the first device, an input (e.g., a selection input and/or a non-selection input) corresponding to a respective application icon of the plurality of application icons. In some embodiments, in response to detecting the input corresponding to the respective application icon of the plurality of application icons, the first device displays, via the display generation component, a user interface corresponding to an application that corresponds to the respective application icon.

In some embodiments, the second user interface is a user interface of an application (e.g., a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application) (e.g., 412) executing (and/or running) on the first device.

In some embodiments, the first device is in communication with (and/or includes) one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, the request to unlock the first device is the first type of unlock request when the request to unlock the first device is detected via the one or more input devices (e.g., and not received from another device different from the first device).

In some embodiments, the request to unlock the first device is the second type of request when the request to unlock the first device is received from a second device (e.g., a watch, a phone, a tablet, a fitness tracking device, a processor, a head-mounted display (HMD) device, a communal device, a media device, a speaker, a television, and/or a personal computing device) (e.g., 310) different from the first device (e.g., and not received from a process and/or application of the first device).

In some embodiments, unlocking the first device includes decrypting a set of one or more keys stored by the first device (e.g., at a secure component and/or element of the first device).

In some embodiments, in response to detecting the request to unlock the first device and in accordance with the determination that the second set of one or more criteria is satisfied, the first device sends, to a second device (e.g., a watch, a phone, a tablet, a fitness tracking device, a processor, a head-mounted display (HMD) device, a communal device, a media device, a speaker, a television, and/or a personal computing device) (e.g., 310) different from the first device, a user interface (e.g., 426) of an application (e.g., a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application) (e.g., 412) of the first device, wherein the user interface is rendered by the first device. In some embodiments, in conjunction with (e.g., before, while, in response, and/or after) to detecting the request to unlock the first device (e.g., and in accordance with the determination that the second set of one or more criteria is satisfied), the first device renders the user interface of the application of the first device.

Note that details of the processes described above with respect to method 700 (e.g., FIG. 7) are also applicable in an analogous manner to other methods described herein. For example, method 800 optionally includes one or more of the characteristics of the various methods described above with reference to method 700. For example, the first device of method 800 is the first device of method 700. For brevity, these details are not repeated herein.

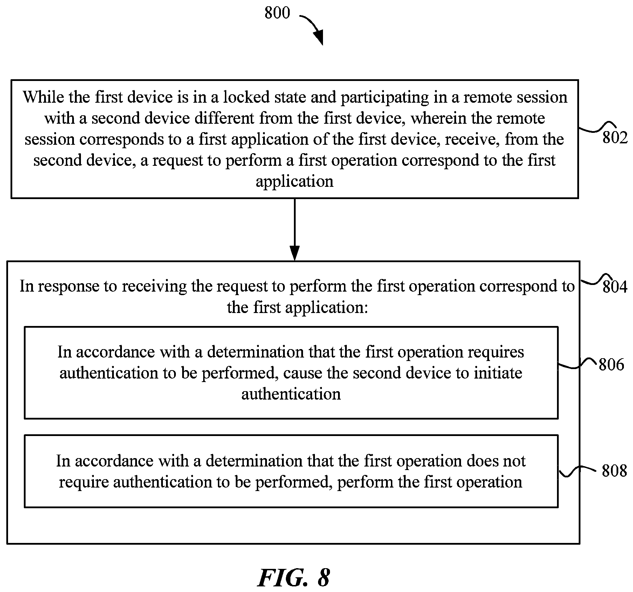

FIG. 8 is a flow diagram illustrating a method (e.g., method 800) for remote authentication in accordance with some embodiments. Some operations in method 800 are, optionally, combined, the orders of some operations are, optionally, changed, and some operations are, optionally, omitted.

As described below, method 800 provides an intuitive way for remote authentication. Method 800 reduces the cognitive burden on a user, thereby creating a more efficient human-machine interface. For battery-operated computing devices, enabling a user to interact with such devices faster and more efficiently conserves power and increases the time between battery charges.

In some embodiments, method 800 is performed at a first device (e.g., a watch, a phone, a tablet, a fitness tracking device, a processor, a head-mounted display (HMD) device, a communal device, a media device, a speaker, a television, and/or a personal computing device) (e.g., 320). In some embodiments, one or more operations described below are performed by a system process (e.g., a process of an operating system) (e.g., 410) of the first device. In some embodiments, one or more operations described below are performed by an application (e.g., 412) of the first device. In some embodiments, one or more operations described below are performed by a security element (e.g., 408) of the first device.

While the first device is in a locked state (e.g., as described above with respect to method 600 and/or method 700) and participating in a remote session (e.g., a call and/or a communication channel for communicating content one way or multiple ways) (e.g., 426 and/or 502) with (e.g., communicating with, sending content to, and/or receiving content from) a second device (e.g., a watch, a phone, a tablet, a fitness tracking device, a processor, a head-mounted display (HMD) device, a communal device, a media device, a speaker, a television, and/or a personal computing device) (e.g., 310) different from the first device, wherein the remote session corresponds to (e.g., related to, directed to, associated with, generated from, stored on, and/or retrieved from) a first application (e.g., a note-taking application, a word-processing application, a game, a messaging application, a maps application, a fitness application, a health application, a digital payments application, a media application, and/or a social network application) (e.g., 412) of the first device (e.g., as part of the remote session, the first device sends content (e.g., a user interface element, a user interface, information, and/or data) from the first application to the second device), the first device receives (802), from the second device, a request (e.g., 504) to perform (e.g., execute and/or access) a first operation corresponding to (e.g., related to, directed to, and/or associated with) the first application.

In response to (804) receiving the request to perform the first operation corresponding to the first application, in accordance with a determination that the first operation requires authentication (e.g., user authentication, such as biometric authentication, multifactor authentication, possession-based authentication, and/or knowledge-based authentication) to be performed, the first device causes (806) (e.g., 506) the second device to initiate (and/or execute) authentication (e.g., without performing the first operation). In some embodiments, causing the second device to initiate authentication includes causing the second device to authenticate a user.

In response to (804) receiving the request to perform the first operation corresponding to the first application, in accordance with a determination that the first operation does not require authentication to be performed, the first device performs (808) (e.g., via the first application) the first operation.

In some embodiments, the first device is in communication with (and/or includes) a display generation component (e.g., a display screen, a projector, a head mounted display, and/or a touch-sensitive display). In some embodiments, the locked state corresponds to the display generation component being in a locked state (e.g., the first device is screen locked such that a user is unable to access certain content from the first device using the display generation component). In some embodiments, another component and/or application of the first device different from the display generation component is not in a locked state at a point while the first device is in the locked state. In some embodiments, while the first device is in the locked state, the first device limits functionality provided via the display generation component (e.g., limits access to and/or ability to display, via the display generation component, user interfaces of one or more applications of the first device). In some embodiments, while the first device is in the locked state, the first device limits foreground processes but, in some embodiments, not background processes.

In some embodiments, the first device is in communication with one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, a first set of one or more operations of the first device is accessible via the one or more input devices while the first device is in the locked state. In some embodiments, a second set of one or more operations, different from (e.g., greater than) the first set of one or more operations, of the first device is accessible via the one or more input devices while the first device is in an unlocked state. In some embodiments, the first device detects, via the one or more input devices, a request to perform an operation. In some embodiments, in response to detecting the request to perform the operation and in accordance with a determination that the first device is in the unlocked state, the first device performs the operation. In some embodiments, in response to detecting the request to perform the operation and in accordance with a determination that the first device is in the locked state, the first device forgoes performance of the operation.

In some embodiments, while participating in (and/or as a part of) the remote session with the second device, the first device sends, to the second device, one or more user interfaces of the first application. In some embodiments, the remote session is specific to the first application such that the first device does not send a user interface of another application different from the first application as part of the remote session.

In some embodiments, in conjunction with (e.g., before, while, after, as part of, and/or in response to) causing the second device to initiate authentication, the first device sends, to the second device, a user interface corresponding to (e.g., related to, associated to, associated with, and/or for) authentication. In some embodiments, in conjunction with (e.g., before, while, after, as part of, and/or in response to) causing the second device to initiate authentication, the first device does not display, via a display generation component (e.g., a display screen, a projector, a head mounted display, and/or a touch-sensitive display) that is in communication with and/or included in the first device, a user interface corresponding to authentication.

In some embodiments, in conjunction with causing the second device to initiate authentication, the first device forgoes sending, to the second device, a user interface corresponding to authentication (e.g., the second device renders and/or displays a user interface corresponding to authentication that is not received from the first device).

In some embodiments, after causing the second device to initiate authentication, the first device receives, from the second device, an indication of a result of authentication (e.g., 508). In some embodiments, the indication of the result includes a request to display a particular user interface (e.g., a user interface resulting from successful authentication when the result is successful and a user interface resulting from unsuccessful authentication when the result is not successful). In some embodiments, in response to receiving the indication corresponding to the result of authentication, in accordance with a determination that the result of authentication is successful, the first device performs, via the first application, the first operation. In some embodiments, in response to receiving the indication corresponding to the result of authentication, in accordance with a determination that the result of authentication is not successful, the first device forgoes performance of, via the first application, the first operation.

In some embodiments, while the first device is in the locked state and participating in the remote session with the second device, the first device receives a request to perform a respective operation that requires authentication. In some embodiments, in response to receiving the request to perform the respective operation that requires authentication, in accordance with a determination that the respective operation is a second operation (e.g., an operation that is able to be authenticated via a remote device, such as the second device), the first device causes the second device to initiate authentication. In some embodiments, the second operation is the first operation or another operation different from the second operation. In some embodiments, in response to receiving the request to perform the respective operation that requires authentication, in accordance with a determination that the second operation is a third operation (e.g., an operation that is not able to be authenticated via a remote device, such as the second device, and/or an operation that is required to be authenticated via the first device) different from the second operation (and/or the first operation), the first device forgoes causing the second device to initiate authentication. In some embodiments, in response to receiving the request to perform the respective operation that requires authentication and in accordance with the determination that the second operation is the third operation, the first device initiates authentication via the first device (e.g., and not via the second device). In some embodiments, in response to receiving the request to perform the respective operation that requires authentication and in accordance with the determination that the second operation is the third operation, the first device forgoes performance of the first operation. In some embodiments, in response to receiving the request to perform the respective operation that requires authentication and in accordance with the determination that the respective operation is the second operation, the first device performs the first operation without causing the second device to initiate authentication (e.g., a previous authentication is still valid and/or received within a predetermined period of time).

Note that details of the processes described above with respect to method 800 (e.g., FIG. 8) are also applicable in an analogous manner to other methods described herein. For example, method 900 optionally includes one or more of the characteristics of the various methods described above with reference to method 800. For example, the first device of method 900 is the first device of method 800. For brevity, these details are not repeated herein.

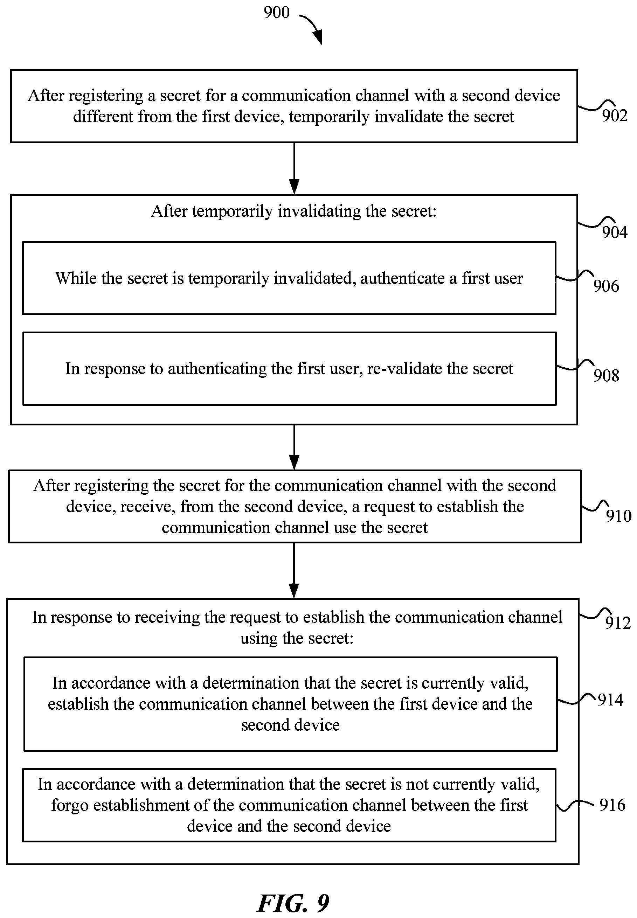

FIG. 9 is a flow diagram illustrating a method (e.g., method 900) for re-validating secrets in accordance with some embodiments. Some operations in method 900 are, optionally, combined, the orders of some operations are, optionally, changed, and some operations are, optionally, omitted.

As described below, method 900 provides an intuitive way for re-validating secrets. Method 900 reduces the cognitive burden on a user, thereby creating a more efficient human-machine interface. For battery-operated computing devices, enabling a user to interact with such devices faster and more efficiently conserves power and increases the time between battery charges.

In some embodiments, method 900 is performed at a first device (e.g., a watch, a phone, a tablet, a fitness tracking device, a processor, a head-mounted display (HMD) device, a communal device, a media device, a speaker, a television, and/or a personal computing device) (e.g., 310 or 320). In some embodiments, one or more operations described below are performed by a system process (e.g., a process of an operating system) (e.g., 404 or 410) of the first device. In some embodiments, one or more operations described below are performed by an application (e.g., 402 or 412) of the first device. In some embodiments, one or more operations described below are performed by a security element (e.g., 406 or 408) of the first device.

After registering (e.g., setting up, assigning, designating, sending, and/or creating) a secret (e.g., a token, a key, a cryptographic key, a public key, a private key, a symmetric key, a password, and/or an encryption key) (e.g., 418) for a communication channel (e.g., a Wi-Fi connection, a Bluetooth connection, a Mobile Network connection, a Peer-to-Peer connection, a Serial connection, and/or a Mobile Network channel, an Internet Protocol connection and/or a Serial and Parallel connection) with a second device (e.g., a watch, a phone, a tablet, a fitness tracking device, a processor, a head-mounted display (HMD) device, a communal device, a media device, a speaker, a television, and/or a personal computing device) (e.g., 310 or 320) different from the first device (and/or while the first device is in a locked state, such as described above with respect to method 600, method 700, and/or method 800), the first device temporarily invalidates (902) (e.g., revokes, expires, terminates, and/or voids) the secret (e.g., causes the secret to be temporarily invalid). In some embodiments, the secret is not able to be used to communicate with the second device via the communication channel while the secret is invalidated (e.g., temporarily invalidated or permanently invalidated). In some embodiments, the secret is registered with the second device. In some embodiments, the secret is registered with the first device. In some embodiments, the secret is registered with a third device (e.g., a server and/or other type of device) different from the first device and the second device. In some embodiments, invalidating the secret is different from encrypting and/or restricting access to the secret. In some embodiments, the secret is temporarily invalidated in response to a determination that the first device and/or the second device transitions into a locked state. In some embodiments, the secret is temporarily invalidated in response to a determination that the first device and/or the second device loses authentication. In some embodiments, the secret is temporarily invalidated in response to a determination that the first device and/or the second device has detected a set of failed authentications that exceed a threshold.

After (904) temporarily invalidating the secret, while the secret is temporarily invalidated, the first device authenticates (906) a first user (e.g., of the first device).

After (904) temporarily invalidating the secret, in response to authenticating the first user, the first device re-validates (908) (re-authorizes, re-establishes, restores permission of, extends authorization of, and/or re-confirms an access right of) the secret (e.g., causes the secret to be currently valid).

After registering the secret for the communication channel with the second device (and/or while the first device is in a locked state), the first device receives (910), from the second device, a request (e.g., 420) to establish the communication channel using the secret.

In response to (912) receiving the request to establish the communication channel using the secret (and/or while the first device is in a locked state), in accordance with a determination that the secret is currently valid (e.g., is not invalidated) (and/or that the secret matches and/or corresponds to another secret included in the request to establish the communication channel), the first device establishes (914) the communication channel between the first device and the second device.

In response to (912) receiving the request to establish the communication channel using the secret, in accordance with a determination that the secret is not currently valid (e.g., the secret is currently invalidated) (and/or that the secret matches and/or corresponds to the other secret included in the request to establish the communication channel), the first device forgoes (916) establishment of the communication channel between the first device and the second device.

In some embodiments, while the secret is valid, the first device detects a request to permanently invalidate the secret. In some embodiments, the request to invalidate the secret is detected via one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) that is in communication with and/or included in the first device. In some embodiments, the request to invalidate the secret is received from the second device. In some embodiments, the request to invalidate the secret originated from a process of the first device. In some embodiments, in response to detecting the request to permanently invalidate the secret, the first device permanently invalidates (e.g., deletes, throws away, and/or wipes) the secret (e.g., the secret is not able to be re-validated, such as by authenticating the first user).

In some embodiments, while the secret is valid, the first device detects a request to restart the first device. In some embodiments, in response to detecting the request to restart, the first device restarts the first device. In some embodiments, in conjunction with (e.g., before, while, in response to, and/or after) restarting the first device, the first device permanently invalidates the secret.

In some embodiments, the secret is a first secret. In some embodiments, after registering the first secret for the communication channel with the second device, the first device permanently invalidates the first secret. In some embodiments, after permanently invalidating the first secret, the first device registers a second secret, different from the first secret, for the communication channel with the second device. In some embodiments, after registering the second secret for the communication channel with the second device, the first device receives, from the second device, a request to establish the communication channel using the second secret. In some embodiments, in response to receiving the request to establish the communication channel using the second secret, in accordance with a determination that the second secret is currently valid, the first device establishes the communication channel between the first device and the second device. In some embodiments, in response to receiving the request to establish the communication channel using the second secret, in accordance with a determination that the second secret is not currently valid, the first device forgoes establishment of the communication channel between the first device and the second device.

**In** some embodiments, registering the secret includes: generating (and/or creating) the secret; and sending, to the second device, at least a portion of the secret (e.g., a public portion of the secret, such as a public key). In some embodiments, the portion of the secret is a private portion of the secret, such as a private key. In some embodiments, the portion of the secret is a symmetric portion of the secret, such as a symmetric key. In some embodiments, the portion of the secret is the secret.

**In** some embodiments, after establishing the communication channel between the first device and the second device (and/or while the communication channel is established between the first device and the second device), the first device sends, to the second device, via the communication channel, one or more user interfaces rendered via (and/or by) an application of the first device.

In some embodiments, the communication channel is established between the first device and the second device while the first device is in a locked state (e.g., as described above with respect to method 600, method 700, and/or method 800).

In some embodiments, the first device is in communication with a display generation component (e.g., a display screen, a projector, a head mounted display, and/or a touch-sensitive display). In some embodiments, the locked state corresponds to the display generation component being in the locked state (e.g., the first device is screen locked such that a user is unable to access certain content from the first device using the display generation component). In some embodiments, another component and/or application of the first device different from the display generation component is not in a locked state at a point while the first device is in the locked state. In some embodiments, while the first device is in the locked state, the first device limits functionality provided via the display generation component (e.g., limits access to and/or ability to display, via the display generation component, user interfaces of one or more applications of the first device). In some embodiments, while the first device is in the locked state, the first device limits foreground processes but, in some embodiments, not background processes.

In some embodiments, the first device is in communication with one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, a first set of one or more operations of the first device is accessible via the one or more input devices while the first device is in the locked state. In some embodiments, a second set of one or more operations, different from (e.g., greater than) the first set of one or more operations, of the first device is accessible via the one or more input devices while the first device is in an unlocked state. In some embodiments, the first device detects, via the one or more input devices, a request to perform an operation. In some embodiments, in response to detecting the request to perform the operation and in accordance with a determination that the first device is in the unlocked state, the first device performs the operation. In some embodiments, in response to detecting the request to perform the operation and in accordance with a determination that the first device is in the locked state, the first device forgoes performance of the operation.

Note that details of the processes described above with respect to method 900 (e.g., FIG. 9) are also applicable in an analogous manner to other methods described herein. For example, method 1000 optionally includes one or more of the characteristics of the various methods described above with reference to method 900. For example, the first device of method 1000 is the first device of method 900. For brevity, these details are not repeated herein.

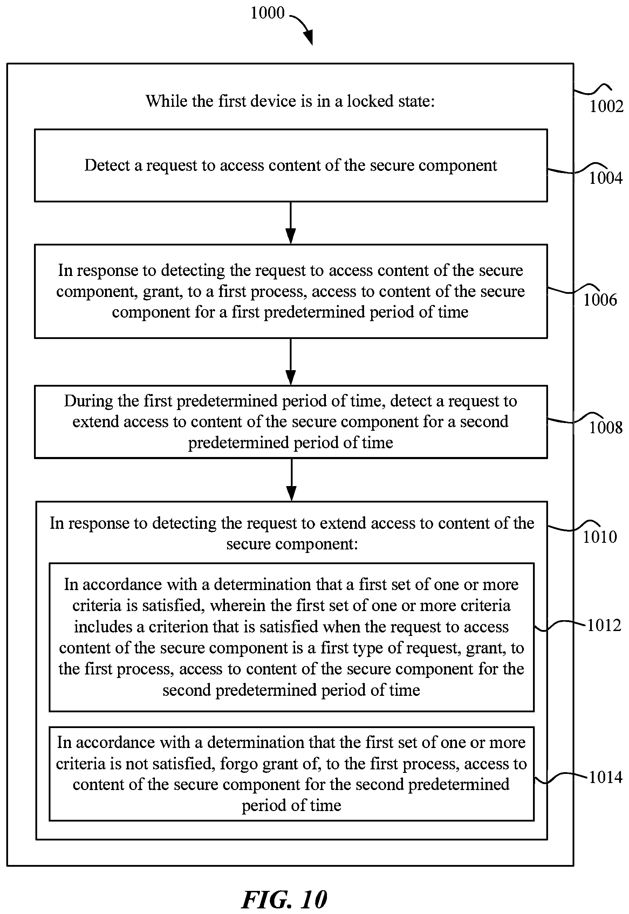

FIG. 10 is a flow diagram illustrating a method (e.g., method 1000) for selectively allowing continued access in accordance with some embodiments. Some operations in method 1000 are, optionally, combined, the orders of some operations are, optionally, changed, and some operations are, optionally, omitted.

As described below, method 1000 provides an intuitive way for selectively allowing continued access. Method 1000 reduces the cognitive burden on a user, thereby creating a more efficient human-machine interface. For battery-operated computing devices, enabling a user to interact with such devices faster and more efficiently conserves power and increases the time between battery charges.

In some embodiments, method 1000 is performed at a secure component (e.g., a secure element, a secure hardware component and/or element, and/or a secure software component and/or element) (e.g., 408) of a first device (e.g., a watch, a phone, a tablet, a fitness tracking device, a processor, a head-mounted display (HMD) device, a communal device, a media device, a speaker, a television, and/or a personal computing device) (e.g., 320). In some embodiments, the secure component stores personal, biometric, financial (e.g., bank statements, utility bills, brokerage accounts, and/or credit card statement), and/or medical data. In some embodiments, the secure component stores data such as user-generated, log, transaction, and/or session data related to the secure component. In some embodiments, the secure component is a chip that is protected from unauthorized access and/or used to run a limited set of applications as well as store confidential and/or cryptographic data. In some embodiments, the secure component does not include an installed application but rather includes one or more preinstalled applications. In some embodiments, a limited number of applications and/or system processes of the first device can communicate with (e.g., read, write, and/or send messages to) the secure component. In some embodiments, the secure component includes a processor and/or memory. In some embodiments, the secure component is a software program.

While (1002) the first device is in a locked state (e.g., as described above with respect to method 600, method 700, method 800, and/or method 900), the secure component detects (1004) a request (e.g., 422) to access content (e.g., data) of (e.g., on, associated with, and/or stored by and/or in) the secure component. In some embodiments, the request corresponds to and/or is associated with a second device (e.g., a watch, a phone, a tablet, a fitness tracking device, a processor, a head-mounted display (HMD) device, a communal device, a media device, a speaker, a television, and/or a personal computing device) different from the first device. In some embodiments, the request corresponds to or is associated with an application (e.g., a user application, such as a calculator application, a word processing application, a media application, and/or a communication application) of (e.g., installed and/or executing on) the first device (e.g., instead of the second device).

While (1002) the first device is in the locked state, in response to detecting the request to access content of the secure component, the secure component grants (1006) (and/or provides) (e.g., 424), to a first process (e.g., of the first device and/or the second device) (and/or an application of the first device and/or the second device) (e.g., 410, 412, 402, and/or 404), access to content of the secure component for a first predetermined period of time (e.g., interval of time greater than 0 seconds, 0 microseconds, and/or 0 milliseconds, such as 5 seconds to 5 minutes). In some embodiments, the request to access content of the secure component is sent to the secure component by the first process. In some embodiments, the request to access content of the secure component is sent to the secure component by another process (e.g., a system process or an application of the first device or the second device) different from the first process.

While (1002) the first device is in the locked state, the secure component durs (1008) the first predetermined period of time, detecting a request to extend access to content of the secure component for a second predetermined period of time (e.g., the first predetermined period of time and/or another predetermined period of time different from the first predetermined period of time). In some embodiments, the request to extend access to content of the secure component is sent to the secure component by the first process. In some embodiments, the request to extend access to content of the secure component is sent to the secure component by the other process.

While (1002) the first device is in the locked state, in response to (1010) detecting the request to extend access to content of the secure component, in accordance with a determination that a first set of one or more criteria is satisfied, wherein the first set of one or more criteria includes a criterion that is satisfied when the request to access content of the secure component is a first type of request (e.g., secured, non-secured, web-based remote access, Virtual Private Network (VPN), Remote Desktop access, and/or application specific request) (e.g., 428), the secure component grants (1012) (e.g., 430), to the first process, access to content of the secure component for the second predetermined period of time (e.g., after the first predetermined period of time or after detecting the request to extend access to content of the secure component). In some embodiments, after granting access to content of the secure component for the second predetermined period of time and without detecting a request to extend access to content of the secure component after detecting the request to extend access to content of the secure component, the secure component revokes access to content of the secure component by the first process when the second predetermined period of time expires.

While (1002) the first device is in the locked state, in response to (1010) detecting the request to extend access to content of the secure component, in accordance with a determination that the first set of one or more criteria is not satisfied (e.g., the request to access content of the secure component is not the first type of request and/or is a second type of request different from the first type of request), the secure component forgoes (1014) grant of, to the first process, (e.g., denies and/or discontinues) access to content of the secure component for the second predetermined period of time. In some embodiments, in response to detecting the request to extend access to content of the secure component and in accordance with the determination that the first set of one or more criteria is not satisfied, the secure component revokes access to content of the secure component by the first process. In some embodiments, after detecting the request to extend access to content of the secure component, in response to the first predetermined period of time expiring, and in accordance with the determination that the first set of one or more criteria is not satisfied, the secure component revokes access to content of the secure component by the first process. In some embodiments, after granting access to content of the secure component for the first predetermined period of time and without detecting a request to extend access to content of the secure component after detecting the request to access content of the secure component, the secure component revokes access to content of the secure component by the first process when the first predetermined period of time expires.

In some embodiments, while the first device is in the locked state, after detecting the request to extend access to content of the secure component, and in accordance with the determination that the first set of one or more criteria is not satisfied and that the first predetermined period of time has expired (e.g., while the second predetermined period of time has expired or not expired), the secure component prevents (e.g., prohibits and/or does not provide one or more keys to) access to the content of the secure component.

In some embodiments, while the first device is in the locked state and before detecting the request to access the content of the secure component, the secure component prevents (e.g., prohibits and/or does not provide one or more keys to) access to the content of the secure component. In some embodiments, the content of the secure component is secured (and/or encrypted) so that the content is not accessible until the secure component grants access to the content of the secure component. In some embodiments, in response to detecting that the first device is transitioning or has transitioned to the locked state, the secure component prevents access to the content of the secure component.

In some embodiments, while granting access to the content of the secure component for the second predetermined period of time, the secure component receives an input corresponding to the first device ceasing a remote session (e.g., a call and/or a communication channel for communicating content one way or multiple ways) with a second device (e.g., a watch, a phone, a tablet, a fitness tracking device, a processor, a head-mounted display (HMD) device, a communal device, a media device, a speaker, a television, and/or a personal computing device) different from the first device. In some embodiments, the input, corresponding to the first device ceasing the remote session with the second device, includes an indication that the remote session has stopped. In some embodiments, the input, corresponding to the first device ceasing the remote session with the second device, does not include an indication that the remote session has stopped. In some embodiments, the input corresponds to an input (e.g., a selection input and/or a non-selection input) detected via one or more input devices that is in communication with and/or included in the first device. In some embodiments, a selection input includes a tap input, a verbal input, an audible command, a gaze input, an air gesture, a mouse click, and/or a submission of a user-interface element and/or a physical hardware element. In some embodiments, a non-selection input includes a verbal input, an audible request, an audible command, an audible statement, a swipe input, a hold-and-drag input, a gaze input, an air gesture, and/or a mouse movement. In some embodiments, the input, corresponding to the first device ceasing the remote session with the second device, is received from a process of the first device. In some embodiments, the input, corresponding to the first device ceasing the remote session with the second device, is received from the second device. In some embodiments, in response to detecting the input corresponding to the first device ceasing the remote session with the second device, the secure component prevents access (e.g., prohibits and/or does not provide one or more keys to) to the content of the secure component.

In some embodiments, the content of the secure component includes a set of one or more keys (and/or key bag).

In some embodiments, the secure component is a secure hardware element.

In some embodiments, the first process is executing (and/or running) separate from (e.g., not executing or running on) the secure component (e.g., the first process is executing on a processor of the first device that is separate from one or more processors of the secure component).

In some embodiments, the first device is in communication with a display generation component (e.g., a display screen, a projector, a head mounted display, and/or a touch-sensitive display). In some embodiments, the locked state corresponds to the display generation component being in the locked state (e.g., the first device is screen locked such that a user is unable to access certain content from the first device using the display generation component). In some embodiments, another component and/or application of the first device different from the display generation component is not in a locked state at a point while the first device is in the locked state. In some embodiments, while the first device is in the locked state, the first device limits functionality provided via the display generation component (e.g., limits access to and/or ability to display, via the display generation component, user interfaces of one or more applications of the first device). In some embodiments, while the first device is in the locked state, the first device limits foreground processes but, in some embodiments, not background processes.

In some embodiments, the first device is in communication with one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, a first set of one or more operations of the first device is accessible via the one or more input devices while the first device is in the locked state. In some embodiments, a second set of one or more operations, different from (e.g., greater than) the first set of one or more operations, of the first device is accessible via the one or more input devices while the first device is in an unlocked state. In some embodiments, the first device detects, via the one or more input devices, a request to perform an operation. In some embodiments, in response to detecting the request to perform the operation and in accordance with a determination that the first device is in the unlocked state, the first device performs the operation. In some embodiments, in response to detecting the request to perform the operation and in accordance with a determination that the first device is in the locked state, the first device forgoes performance of the operation.

In some embodiments, while the first device is in the locked state (and/or the secure component is granting, to the first process, access to the content of the secure component, such as for the first predetermined period of time or for the second predetermined period of time), the secure component sends, to a second device (e.g., a watch, a phone, a tablet, a fitness tracking device, a processor, a head-mounted display (HMD) device, a communal device, a media device, a speaker, a television, and/or a personal computing device) different from the first device, one or more user interfaces of an application executing on the first device. In some embodiments, the one or more user interfaces are sent to the second device by the first process, the secure component, and/or another process, different from the first process and the secure component, of the first device. In some embodiments, the application is executing in the first process. In some embodiments, the application is executing in another process different from the first process.

In some embodiments, the first device is in communication with a display generation component (e.g., a display screen, a projector, a head mounted display, and/or a touch-sensitive display). In some embodiments, while the first device in the locked state (and/or the secure component is granting, to the first process, access to the content of the secure component, such as for the first predetermined period of time or for the second predetermined period of time), the secure component prevents (e.g., prohibits and/or disables) display of, via the display generation component, a user interface of the application. In some embodiments, while the first device is in the locked state (and/or the secure component is granting, to the first process, access to the content of the secure component, such as for the first predetermined period of time or for the second predetermined period of time), the secure component and/or a process of the first device does not prevent display of, via the display generation component, a lock screen including a user interface element of the application. In some embodiments, while the first device is in an unlocked state, the secure component and/or a process of the first device does not prevent display of, via the display generation component, the user interface of the application.

Note that details of the processes described above with respect to method 1000 (e.g., FIG. 10) are also applicable in an analogous manner to the methods described herein. For example, method 600 optionally includes one or more of the characteristics of the various methods described herein with reference to method 1000. For example, the first device of method 600 is the first device of method 1000. For brevity, these details are not repeated herein.

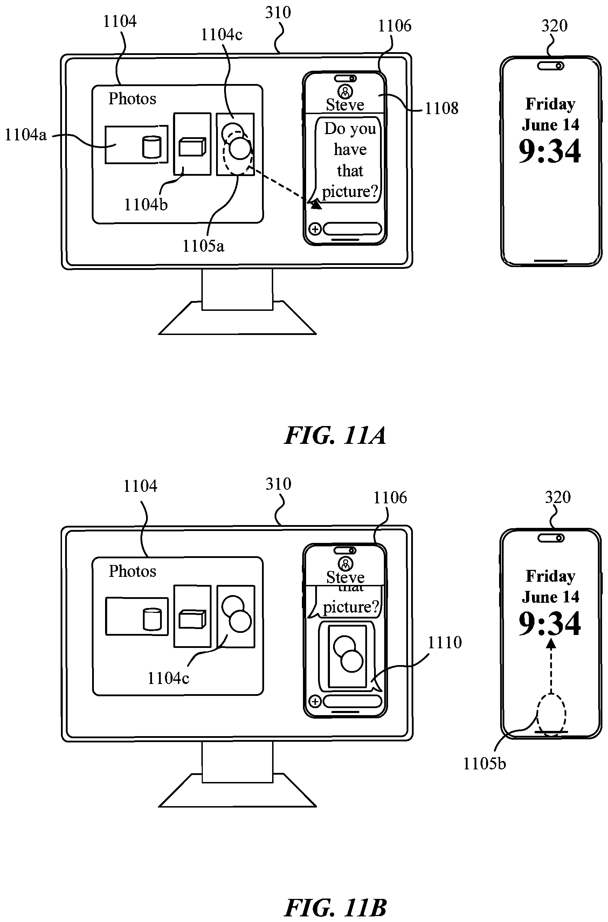

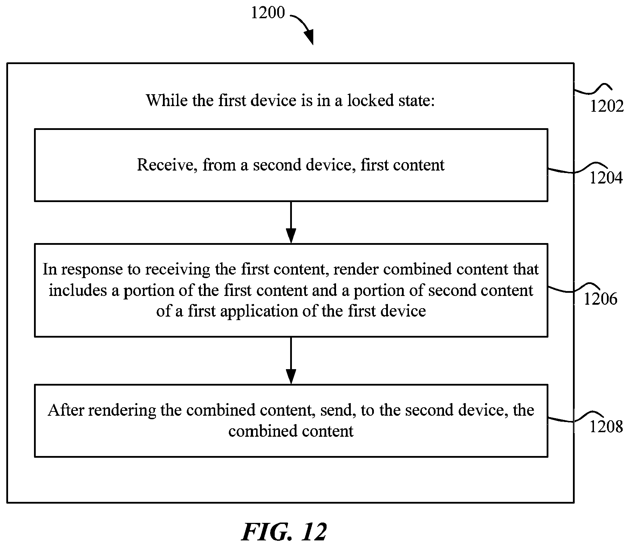

FIGS. 11A-11C illustrate exemplary user interfaces for interacting between devices in accordance with some embodiments. The user interfaces in these figures are used to illustrate the processes described below, including the processes in FIG. 12.

FIGS. 11A-11C illustrate first device 310 as a desktop computer and second device 320 as a smart phone. It should be recognized that computer system 310 can be other types of computer systems, such as a smart phone, a smart watch, a tablet, a laptop, a communal device, an accessory, a personal gaming system, a laptop computer, a fitness tracking device, and/or a head-mounted display (HMD) device. It should be recognized that computer system 320 can be other types of computer systems, such as a desktop computer, a smart watch, a tablet, a laptop, a communal device, an accessory, a personal gaming system, a laptop computer, a fitness tracking device, and/or a head-mounted display (HMD) device.

At FIG. 11A, first device 310 and second device 320 are in a remote session. In some embodiments, the remote session is established via one or more processes described above, such as the processes described above with respect to 414, 416, 418, 420, 422, 424, and/or 426. For example, first device 310 can establish a connection with second device 320 so that a user can access content and/or applications of second device 320 via first device 310. In such an example, second device 320 can render content (e.g., one or more user interface elements and/or one or more user interfaces) and send the content to first device 310 for display by first device 310.

At FIG. 11A, second device 310 renders a user interface of a messaging application (e.g., a text messaging application, a SMS messaging application, and/or an Internet messaging application) (e.g., application B 412). In some embodiments, second device 320 (e.g., and not first device 310) is executing (and/or rendering content for) the messaging application. For example, a messaging thread with another device (e.g., "Steve," which is different from first device 310 and second device 320) can be rendered by second device 320 and sent to first device 310 for display by first device 310.

In some embodiments, second device 320 is in a locked state (e.g., as described above with respect to FIGS. 4-5) while the remote session is established. In such embodiments, second device 320 displays a lock screen (e.g., as illustrated in FIG. 11A) and/or another user interface indicative of device 320 being in the locked state while sending the content to first device 310. It should be recognized that the lock screen can include information from the messaging application of second device 320, such as a widget and/or a notification corresponding to the messaging application of second device 320. In some embodiments, the widget and/or the notification does not allow the same functionality as phone user interface 1106 as described below. For example, the widget and/or the notification might require second device 320 to be unlocked before sending a message. It should also be recognized that second device 320 can display other user interfaces while in the locked state and/or not display any user interface at all (e.g., one or more display generation components of second device 320 can be inactive and/or off). In some embodiments, second device 320 remains in the locked state until second device 320 detects a set of one or more inputs that cause second device 320 to transition from the locked state to an unlocked state, as described further below with respect to FIGS. 11B-11C.

As illustrated in FIG. 11A, first device 310 displays photos user interface 1104 while the remote session is established. In some embodiments, photos user interface 1104 is a user interface corresponding to a photos application of (e.g., installed on and/or executing by first device 310). It should be recognized that other applications can be used with techniques described herein, such as a file browser, a media application, and/or a search application. As illustrated in FIG. 11A, photos user interface 1104 includes multiple photos (e.g., photo 1104a, photo 1104b, and photo 1104c). In some embodiments, the multiple photos are stored on first device 310 and/or another device (e.g., a server) in communication with first device 310.

As illustrated in FIG. 11A, first device 310 displays phone user interface 1106 while the remote session is established and while photos user interface 1104 is displayed. In some embodiments, phone user interface 1106 is an emulation of content corresponding to second device 320. For example, phone user interface 1106 can be rendered by second device 320 and provided to first device 310 as part of the remote session. In some embodiments, phone user interface 1106 includes content from second device 320 and is used by first device 310 to interact with the messaging application of second device 320. In such embodiments, interactions with phone user interface 1106 can cause first device 310 to communicate such interactions to second device 320 so that the messaging application can resolve the interactions. In some embodiments, first device 310 includes a messaging application separate from the messaging application of second device 320. In such embodiments, interactions with phone user interface 1106 can be handled by the messaging application of second device 320 instead of the messaging application of first device 310.

At FIG. 11A, first device 310 detects input 1105a corresponding to photo 1104c. In some embodiments, input 1105a is a tap-and-drag input initiated at photo 1104c and moved to phone user interface 1106. It should be recognized that input 1105a is merely used as an example and that techniques described herein can use other types of inputs to indicate when content should be sent from first device 310 to second device 320 so that an application of second device 320 (e.g., the messaging application of second device 320) can use the content to respond to an input.

In some embodiments, in response to detecting input 1105a, first device 310 sends photo 1104c (and/or a copy of photo 1104c) to second device 320. It should be recognized that communication of photo 1104c can be performed in a number of different ways, including the photos application of first device 310 sending photo 1104c to application A 402 so that application A 402 can send photo 1104c either directly to the messaging application of second device 320 or to the messaging application of second device 320 via secure element 408 and/or system process 410 as described above with respect to FIG. 4.

In some embodiments, in response to receiving photo 1104c, second device 320 renders an updated user interface to send to first device 310 without updating what is displayed by second device 320. For example, the messaging application of second device 320 can receive photo 1104c and determine that a user of first device 310 is requesting to send photo 1104c as a message in the message thread being displayed by first device 310. In such an example, the messaging application can either (1) update (e.g., render) and send a user interface to first device 310 for display by first device 310 before sending photo 1104c as a message in the message thread or (2) send photo 1104c as a message in the message thread and, after, update (e.g., render) and send a user interface to first device 310 for display by first device 310. In some embodiments, the user interface rendered by second device 320 in response to receiving photo 1104c content from first device 310 (e.g., the message thread) and content from second device 320 (e.g., photo 1104c).

As illustrated in FIG. 11B, first device 310 maintains display of photos user interface 1104 while updating display of phone user interface 1106 to include message 1110. In some embodiments, the display of phone user interface 1106 is updated (1) while first device 310 is still in the remote session with second device 320, (2) while second device 320 is still in the locked state, (3) while second device 320 is not being interacted with directly via an input device of second device 320, and/or (4) in response to receiving such update from second device 320. As illustrated in FIG. 11B, phone user interface 1106 has been updated to indicate that photo 1104c has been sent in a message (e.g., represented by message 1110) as part of the message thread described above. As mentioned above, in some embodiments, the message is sent by second device 320 to the other device in the message thread (e.g., "Steve") as part of the remote session and in response to first device 310 detecting input 1105a.

At FIG. 11B, after second device 320 sends the update of phone user interface 1106 to first device 310, second device 310 detects input 1105b corresponding to a request to unlock second device 310. In some embodiments, input 1105b is a swipe input that is (1) initiated at a bottom portion of a user interface displayed by second device 320 and (2) proceeds in an upward direction. It should be recognized that other types of inputs can be used to unlock second device 310. It should also be recognized that unlocking second device 320 can require one or more other steps, such as authentication of a user.

After FIG. 11B, in response to detecting 1105b, second device 320 transitions from the locked state to an unlocked state. For example, while in the unlocked state, second device 320 might no longer display the lock screen and/or allow a user access to functionality not allowed while second device 320 is in the locked state.

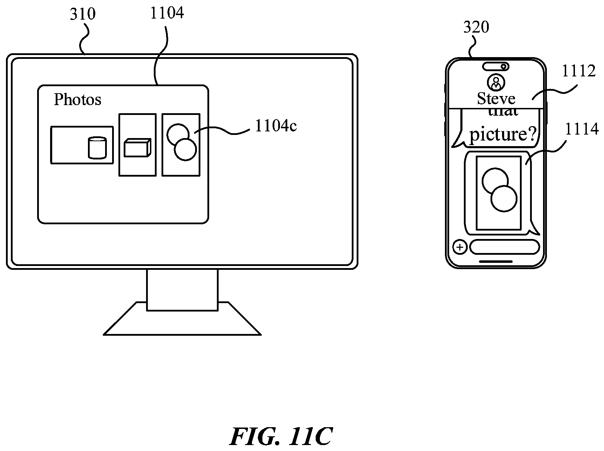

As illustrated in FIG. 11C, in response to (and/or after) detecting 1105b, second device 320 displays a user interface of the messaging application of second device 320. In some embodiments, the user interface of the messaging application of second device 320 displayed by second device 320 is the same as phone user interface 1106 (e.g., except for, in some embodiments, changes in resolution, aspect ratio, brightness, color, and/or other visual differences between first device 310 and second device 320). In some embodiments, a user of second device 320 can interact with the user interface of the messaging application of second device 320 displayed by second device 320 using second device 320. For example, second device 320 can detect a set of one or more inputs corresponding to the user interface of the messaging application of second device 320 displayed by second device 320 and, in response, change display of the user interface of the messaging application of second device 320 in accordance with the set of one or more inputs.

At FIG. 11C, after second device 320 detects input 1105b, first device 310 maintains display of photos user interface 1104 while ceasing display of phone user interface 1106. In some embodiments, first device 310 ceases display of phone user interface 1106 in response to the remote session between first device 310 and second device 320 terminating. In such embodiments, input 1105b can cause termination of the remote session (e.g., as a result of second device 320 determining that a user is interacting with second device 320 over a threshold, as described above). It should be recognized that, in other embodiments, first device 310 maintains the remote session and/or display of phone user interface 1106 after detecting input 1105b.

FIG. 12 is a flow diagram illustrating a process (e.g., process 1200) for interacting between devices in accordance with some embodiments. Some operations in process 1200 are, optionally, combined, the orders of some operations are, optionally, changed, and some operations are, optionally, omitted.

As described below, process 1200 provides an intuitive way for interacting between devices. Process 1200 reduces the cognitive burden on a user, thereby creating a more efficient human-machine interface. For battery-operated computing devices, enabling a user to interact with such devices faster and more efficiently conserves power and increases the time between battery charges.

In some embodiments, process 1200 is performed at a first device (e.g., a watch, a phone, a tablet, a fitness tracking device, a processor, a head-mounted display (HMD) device, a communal device, a media device, a speaker, a television, and/or a personal computing device) (e.g., 320). In some embodiments, one or more operations described below are performed by a system process (e.g., a process of an operating system) of the first device. In some embodiments, one or more operations described below are performed by an application of the first device. In some embodiments, one or more operations described below are performed by a security element of the first device.

While (1202) the first device is in a locked state (e.g., a screen locked state, a device lock state, access to one or more applications being limited, and/or communication between applications being limited) (e.g., as illustrated by 320 in FIGS. 11A-11C and described above with respect to FIGS. 11A-11C), the first device receives (1204), from a second device (e.g., a watch, a phone, a tablet, a fitness tracking device, a processor, a head-mounted display (HMD) device, a communal device, a media device, a speaker, a television, and/or a personal computing device) (e.g., 310) different from the first device, first content (e.g., remote content, an image, a video, and/or text) (e.g., 1104c and/or content corresponding to 1104c) (e.g., as described above with respect to FIG. 11A). In some embodiments, the first content is from and/or corresponds to an application (e.g. of (e.g., a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, a communication application, a browser, a photos application, a song application, and/or a social network application) stored by and/or executing on) the second device. In some embodiments, the first device being in the locked state includes the first device displaying a lock screen and/or other user interface corresponding to the locked state. In some embodiments, the first device being in the locked state includes the first device turning off and/or limiting use (e.g., a rate of detection) one or more input devices (e.g., a camera, a depth sensor, a microphone, a hardware input mechanism, a rotatable input mechanism, a heart monitor, a temperature sensor, and/or a touch-sensitive surface) of and/or in communication with the first device. In some embodiments, the first device includes and/or is in communication with a display generation component (e.g., a display screen, a projector, a head mounted display, and/or a touch-sensitive display). In some embodiments, the first device being in the locked state includes the first device reducing brightness of the display generation component.

While (1202) the first device is in the locked state, in response to (and/or after) receiving the first content, the first device renders (1206) (and/or generates) combined content (e.g., 1106) (e.g., without displaying the combined content), wherein the combined content includes a portion of the first content (e.g., 1110) and a portion of second content (e.g., content outside of 1110 in 1006) of a first application of (e.g., stored by and/or executing on) the first device (e.g., as described above with respect to FIG. 11A). In some embodiments, the second content was stored by the first device before receiving the first content. In some embodiments, the second content was sent by the first device to the second device for display by the second device before receiving the first content. In some embodiments, the combined content includes the first content. In some embodiments, the combined content includes content from multiple applications stored and/or executing by or on the first device. In some embodiments, the first application is a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, a communication application, a browser, a photos application, a song application, and/or a social network application. In some embodiments, the first application is a different application (and/or a different application) than the application of the second device.

While (1202) the first device is in the locked state, after (and/or in response to) rendering the combined content, the first device sends (1208), to the second device, the combined content (e.g., causes the combined content to be displayed by the second device) (e.g., without the first device displaying the combined content) (e.g., as described above with respect to FIG. 11A).

In some embodiments, the first device includes one or more display generation components (e.g., a display screen, a projector, a head mounted display, and/or a touch-sensitive display). In some embodiments, while receiving the first content, the first device displays, via the one or more display generation components, third content (e.g., different from the first content and the combined content) (e.g., without displaying the first content (and/or a portion of the first content) and/or the second content (and/or a portion of the second content)) (e.g., as illustrated by 320 in FIG. 11A and/or described above with respect to FIG. 11A), wherein the third content is not updated based on the first content (e.g., and/or the second content).

In some embodiments, the third content is a lock screen (e.g., a user interface corresponding to, representing, and/or indicative of the locked state). In some embodiments, the third content includes an indication of a current time and/or date. In some embodiments, the third content includes a representation (e.g., an icon and/or a widget) of the first application. In some embodiments, the representation of the first application does not include the first content and/or the second content. In some embodiments, the third content does not include a representation or an indication corresponding to the first application.

In some embodiments, the first device is not displaying content (e.g., via one or more display generation components included in the first device) in conjunction with (e.g., before, while, in response to, and/or after) receiving the first content and while sending the combined content. In some embodiments, the first device is not displaying content after receiving the first content but before sending the combined content. In some embodiments, the first device does not display content (e.g., the first content, the second content, the third content, and/or other content different from the first content, the second content, and the third content) as a result of and/or in response to rendering the combined content and/or sending the combined content.

In some embodiments, before receiving the first content, the first device establishes a remote session (e.g., a call and/or a communication channel for communicating content one way or multiple ways) with the second device (e.g., initiated by the first device or the second device), wherein the second content is received via the remote session, and wherein the combine content is sent via the remote session. In some embodiments, the remote session is maintained while receiving the first content, rendering the combined content, and/or sending the combined content.

In some embodiments, the first device includes one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) and one or more display generation components (e.g., a display screen, a projector, a head mounted display, and/or a touch-sensitive display). In some embodiments, after sending, to the second device, the combined content (and/or while displaying the third content), the first device detects, via the one or more input devices, an input (e.g., 1105b) corresponding to a request to display the combined content. In some embodiments, the request to display the combined content is a request to unlock the first device. In some embodiments, the combined content is displayed while the first device is in an unlocked state (e.g., a home screen, a device unlock state, access to one or more applications not being limited, and/or communication between applications not being limited) (e.g., unlocks the first device). In some embodiments, the input corresponding to the request to display the combined content is a swipe gesture in an upward direction from a bottom portion of a displayed area of the first device. In some embodiments, in response to detecting the input corresponding to the request to display the combined content, the first device displays, via the one or more display generation components, the combined content (e.g., 1112 and/or 1114). In some embodiments, the combined content is not displayed before detecting the input corresponding to the request to display the combined content.

In some embodiments, the first device is logged into a first account (e.g., a first user account) (e.g., without being logged into another account different from the first account). In some embodiments, the second device is logged into the first account (e.g., without being logged into another account different from the first account).

In some embodiments, before receiving the first content, the first device sends, to the second device, fourth content (e.g., 1106 and/or 1108) different from the first content (and/or the second content, the combined content, and/or the third content) (e.g., for display by the second device). In some embodiments, the fourth content is the second content.

In some embodiments, after sending the combined content, the first device receives, from the second device, an input corresponding to the combined content. In some embodiments, in response to (and/or after) receiving the input corresponding to the combined content, the first device renders fifth content (e.g., without displaying the fifth content) different from the first content, the second content, and the combined content (and/or the third content and/or the fourth content). In some embodiments, after (and/or in response to) rendering the fifth content, the first device sends, to the second device, the fifth content (e.g., causes the fifth content to be displayed by the second device) (e.g., without the first device displaying the fifth content).

Note that details of the processes described above with respect to method 1200 (e.g., FIG. 12) are also applicable in an analogous manner to the methods described herein. For example, method 600 optionally includes one or more of the characteristics of the various methods described herein with reference to method 1000. For example, the first device of method 600 can be the first device of method 1200. For brevity, these details are not repeated herein.

In some embodiments, one or more of methods 600, 700, 800, 900, 1000, and 1200 (FIGS. 6, 7, 8, 9, 10, and 12) is performed at a first computer system (as described herein) via a system process (e.g., an operating system process) that is different from one or more applications executing and/or installed on the first computer system.

In some embodiments, one or more of methods 600, 700, 800, 900, 1000, and 1200 (FIGS. 6, 7, 8, 9, 10, and 12) is performed at a first computer system (as described herein) by an application that is different from a system process. In some embodiments, the instructions of the application, when executed, control the first computer system to perform one or more of methods 600, 700, 800, 900, 1000, and 1200 (FIGS. 6, 7, 8, 9, 10, and 12) by calling an application programming interface (API) provided by the system process. In some embodiments, the application performs at least a portion of one or more of methods 600, 700, 800, 900, 1000, and 1200 (FIGS. 6, 7, 8, 9, 10, and 12) without calling the API. In some embodiments, the application can be any suitable type of application, including, for example, one or more of: a browser application, a super-app that functions as an application execution environment for plug-ins, widgets or other applications, a fitness application, a health application, a digital payments application, a media application, a social network application, a messaging application, and/or a maps application. In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform one or more of methods 600, 700, 800, 900, 1000, 1200 (FIGS. 6, 7, 8, 9, 10, and 12) by calling an application programming interface (API) provided by the system process using one or more parameters. In some embodiments, exemplary APIs provided by the system process include one or more of: a Pairing API (e.g., for establishing secure connection, e.g., with an accessory), a Device detection API (e.g., for locating nearby devices, e.g., Apple TVs, other iPhones), a UIKit API (e.g., for generating user interfaces), a Location Detection API, a FindMy API, a Maps API, a Health Sensor API, a Sensor API, a Messaging API, a Push Notification API, a Streaming API, a collaboration API, a video conferencing API (e.g., FaceTime/SharePlay API), a web browser API (e.g., WebKit API), a CarPlay API, a Networking API, a WiFi API, a Bluetooth API, an NFC API, a UWB API, a Fitness API, a HomeKit API, NameDrop API, Photos API, Camera API, and/or an Image Processing API. In some embodiments, at least one API is a software module (e.g., a collection of computer-readable instructions) that provides an interface that allows a different module (e.g., API calling module) to access and use one or more functions, methods, procedures, data structures, classes, and/or other services provided by an OS implementation module of the system process. The API can define one or more parameters that are passed between the API calling module and the OS implementation module. The OS implementation module is an operating system software module (e.g., a collection of computer-readable instructions) that is constructed to perform an operation in response to receiving an API call via the API. In some embodiments, the OS implementation module is constructed to provide an API response (via the API) as a result of processing an API call.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve how a user interacts with a device. The present disclosure contemplates that in some instances, this gathered data can include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to change how a user interacts with a device. Accordingly, use of such personal information data enables better user interactions. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

Exemplary methods, first devices, and non-transitory computer-readable storage media are set out in the following items.
1. A method, comprising:
   at a first device:
   while the first device is in a locked state:
   receiving, from a second device different from the first device, a request to remotely access a first application of the first device; and
   in response to receiving the request to remotely access the first application of the first device:
      in accordance with a determination that a first set of one or more criteria is satisfied, sending, to the second device, a first user interface of the first application, wherein the first user interface is rendered by the first device; and
      in accordance with a determination that the first set of one or more criteria is not satisfied, forgoing sending, to the second device, the first user interface of the first application.
2. The method of item 1, wherein the first device is in communication with a display generation component, the method further comprising:
   while sending, to the second device, the first user interface of the first application, displaying, via the display generation component, a second user interface corresponding to the locked state, wherein the first user interface of the first application is different from the second user interface corresponding to the locked state.
3. The method of item 1, further comprising:
   while the first device is in the locked state and in response to receiving the request to remotely access the first application of the first device, unlocking a set of one or more keys stored by the first device.
4. The method of item 1, wherein the device is in communication with one or more input devices, the method further comprising:
   while the first device is in the locked state and after sending, to the second device, the first user interface of the first application, detecting, via the one or more input devices, an input corresponding to a request to unlock the first device; and
   in response to detecting the input corresponding to the request to unlock the first device, transitioning the first device from the locked state to an unlocked state.
5. The method of item 1, further comprising:
   after sending, to the second device, the first user interface of the first application, receiving, from the second device, an input corresponding to the first user interface; and
   in response to receiving the input corresponding to the first user interface, providing, to the first application, the input corresponding to the first user interface while maintaining the first device in the locked state.
6. The method of item 1, wherein the first device is in communication with one or more input devices, the method further comprising:
   after sending, to the second device, the first user interface of the first application, detecting, via the one or more input devices, a set of one or more inputs including an input detected while the first device is in the locked state; and
   in response to detecting the set of one or more inputs:
      in accordance with a determination that a second set of one or more criteria, different from the first set of one or more criteria, is satisfied, terminating a remote access session corresponding to the request to remotely access the first application of the first device; and
      in accordance with a determination that a third set of one or more criteria, different from the first set of one or more criteria and the second set of one or more criteria, is satisfied, maintaining the remote access session.
7. The method of item 1, further comprising:
   while a first instance of a system process of the first device is executing, in response to receiving the request to remotely access the first application of the first device, and in accordance with the determination that the first set of one or more criteria is satisfied, initiating a second instance of the system process, wherein the second instance is separate from the first instance.
8. The method of item 7, further comprising:
   after initiating the second instance of the system process, receiving, from the second device, a request to remotely access a second application of the first device, wherein the second application is different from the first application; and
   in response to receiving the request to remotely access the second application of the first device:
      in accordance with a determination that a second set of one or more criteria is satisfied, initiating a third instance of the system process, wherein the third instance is separate from the first instance and the second instance; and
      in accordance with a determination that the second set of one or more criteria is not satisfied, forgoing initiating the third instance of the system process.
9. The method of item 7, wherein the first device is in communication with a display generation component, the method further comprising:
   displaying, via the display generation component and the first instance of the system process, a user interface element of the first application, wherein the user interface element corresponds to a first instance of the first application; and
   while displaying the user interface element of the first application, rendering, via the first instance of the first application and the first instance of the system process, the first user interface of the first application.
10. The method of item 1, wherein the first device includes an embedded display generation component, wherein the embedded display generation component is in an off state while the first device sends, to the second device, the first user interface of the first application.
11. The method of item 1, wherein the first device is in communication with a display generation component, wherein the display generation component is configured to output content in a first orientation, and wherein the first user interface of the first application has a second orientation different from the first orientation.
12. The method of item 1, further comprising:
   after sending, to the second device, the first user interface of the first application, receiving, from the second device, a request for a third user interface, different from the first user interface of the first application, while the display generation component is configured to output content in a first orientation, wherein the first user interface has a second orientation different from the first orientation; and
   in response to receiving the request for the third user interface, sending to the second device, the third user interface of the first application, wherein the third user interface has a third orientation different from the second orientation.
13. The method of item 1, wherein the first device is in communication with a display generation component and one or more input devices, the method further comprising:
   after sending, to the second device, the first user interface of the first application, detecting, via the one or more input devices, an attention of a subject; and
   in response to detecting the attention of the subject:
      in accordance with a determination that a third set of one or more criteria is satisfied, wherein the third set of one or more criteria includes a criterion that is satisfied when the attention of the subject is determined to correspond to the first device, displaying, via the display generation component, a user interface element without including the user interface element in a user interface sent to the second device; and
      in accordance with a determination that a fourth set of one or more criteria, different from the third set of one or more criteria, is satisfied, wherein the fourth set of one or more criteria includes a criterion that is satisfied when the attention of the subject is determined to correspond to the second device, sending, to the second device, a user interface including the user interface element without displaying, via the display generation component, the user interface element.
14. The method of item 1, further comprising:
   after sending, to the second device, the first user interface of the first application, receiving, from the second device, an indication of an input corresponding to the first user interface; and
   in response to receiving the indication of the input corresponding to the first user interface:
      in accordance with a determination that the indication of the input corresponds to a first operation of the first application, causing the second device to perform an authentication; and
      in accordance with a determination that the indication of the input corresponds to a second operation different from the first operation, forgoing causing the second device to perform the authentication.
15. The method of item 14, further comprising:
   in response to receiving the indication of the input corresponding to the first user interface and in accordance with the determination that the indication of the input corresponds to the second operation, preventing the second operation from being performed.
16. A non-transitory computer-readable storage medium storing one or more programs configured to be executed by one or more processors of a first device, the one or more programs including instructions for:
   while the first device is in a locked state:
   receiving, from a second device different from the first device, a request to remotely access a first application of the first device; and
   in response to receiving the request to remotely access the first application of the first device:
      in accordance with a determination that a first set of one or more criteria is satisfied, sending, to the second device, a first user interface of the first application, wherein the first user interface is rendered by the first device; and
      in accordance with a determination that the first set of one or more criteria is not satisfied, forgoing sending, to the second device, the first user interface of the first application.
17. A first device, comprising:
   one or more processors; and
   memory storing one or more programs configured to be executed by the one or more processors, the one or more programs including instructions for:
      while the first device is in a locked state:
      receiving, from a second device different from the first device, a request to remotely access a first application of the first device; and
      in response to receiving the request to remotely access the first application of the first device:
         in accordance with a determination that a first set of one or more criteria is satisfied, sending, to the second device, a first user interface of the first application, wherein the first user interface is rendered by the first device; and
         in accordance with a determination that the first set of one or more criteria is not satisfied, forgoing sending, to the second device, the first user interface of the first application.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
at a first device:
while the first device is in a locked state:
receiving, from a second device different from the first device, a request to remotely access a first application of the first device; and
in response to receiving the request to remotely access the first application of the first device:
in accordance with a determination that a first set of one or more criteria is satisfied, sending, to the second device, a first user interface of the first application, wherein the first user interface is rendered by the first device; and
in accordance with a determination that the first set of one or more criteria is not satisfied, forgoing sending, to the second device, the first user interface of the first application.

2. The method of claim 1, wherein the first device is in communication with a display generation component, the method further comprising:
while sending, to the second device, the first user interface of the first application, displaying, via the display generation component, a second user interface corresponding to the locked state, wherein the first user interface of the first application is different from the second user interface corresponding to the locked state.

3. The method of any one of claims 1-2, further comprising:
while the first device is in the locked state and in response to receiving the request to remotely access the first application of the first device, unlocking a set of one or more keys stored by the first device.

4. The method of any one of claims 1-3, wherein the device is in communication with one or more input devices, the method further comprising:
while the first device is in the locked state and after sending, to the second device, the first user interface of the first application, detecting, via the one or more input devices, an input corresponding to a request to unlock the first device; and
in response to detecting the input corresponding to the request to unlock the first device, transitioning the first device from the locked state to an unlocked state.

5. The method of any one of claims 1-4, further comprising:
after sending, to the second device, the first user interface of the first application, receiving, from the second device, an input corresponding to the first user interface; and
in response to receiving the input corresponding to the first user interface, providing, to the first application, the input corresponding to the first user interface while maintaining the first device in the locked state.

6. The method of any one of claims 1-5, wherein the first device is in communication with one or more input devices, the method further comprising:
after sending, to the second device, the first user interface of the first application, detecting, via the one or more input devices, a set of one or more inputs including an input detected while the first device is in the locked state; and
in response to detecting the set of one or more inputs:
in accordance with a determination that a second set of one or more criteria, different from the first set of one or more criteria, is satisfied, terminating a remote access session corresponding to the request to remotely access the first application of the first device; and
in accordance with a determination that a third set of one or more criteria, different from the first set of one or more criteria and the second set of one or more criteria, is satisfied, maintaining the remote access session.

7. The method of any one of claims 1-6, further comprising:
while a first instance of a system process of the first device is executing, in response to receiving the request to remotely access the first application of the first device, and in accordance with the determination that the first set of one or more criteria is satisfied, initiating a second instance of the system process, wherein the second instance is separate from the first instance.

8. The method of any one of claims 1-7, wherein the first device includes an embedded display generation component, wherein the embedded display generation component is in an off state while the first device sends, to the second device, the first user interface of the first application.

9. The method of any one of claims 1-8, wherein the first device is in communication with a display generation component, wherein the display generation component is configured to output content in a first orientation, and wherein the first user interface of the first application has a second orientation different from the first orientation.

10. The method of any one of claims 1-9, further comprising:
after sending, to the second device, the first user interface of the first application, receiving, from the second device, a request for a third user interface, different from the first user interface of the first application, while the display generation component is configured to output content in a first orientation, wherein the first user interface has a second orientation different from the first orientation; and
in response to receiving the request for the third user interface, sending to the second device, the third user interface of the first application, wherein the third user interface has a third orientation different from the second orientation.

11. The method of any one of claims 1-10, wherein the first device is in communication with a display generation component and one or more input devices, the method further comprising:
after sending, to the second device, the first user interface of the first application, detecting, via the one or more input devices, an attention of a subject; and
in response to detecting the attention of the subject:
in accordance with a determination that a third set of one or more criteria is satisfied, wherein the third set of one or more criteria includes a criterion that is satisfied when the attention of the subject is determined to correspond to the first device, displaying, via the display generation component, a user interface element without including the user interface element in a user interface sent to the second device; and
in accordance with a determination that a fourth set of one or more criteria, different from the third set of one or more criteria, is satisfied, wherein the fourth set of one or more criteria includes a criterion that is satisfied when the attention of the subject is determined to correspond to the second device, sending, to the second device, a user interface including the user interface element without displaying, via the display generation component, the user interface element.

12. The method of any one of claims 1-11, further comprising:
after sending, to the second device, the first user interface of the first application, receiving, from the second device, an indication of an input corresponding to the first user interface; and
in response to receiving the indication of the input corresponding to the first user interface:
in accordance with a determination that the indication of the input corresponds to a first operation of the first application, causing the second device to perform an authentication; and
in accordance with a determination that the indication of the input corresponds to a second operation different from the first operation, forgoing causing the second device to perform the authentication.

13. The method of any one of claims 1-11, further comprising:
in response to receiving the indication of the input corresponding to the first user interface and in accordance with the determination that the indication of the input corresponds to the second operation, preventing the second operation from being performed.

14. A non-transitory computer-readable medium storing one or more programs configured to be executed by one or more processors of a first device, the one or more programs including instructions for performing the method of any one of claims 1-13.

15. A first device, comprising:
one or more processors; and
memory storing one or more programs configured to be executed by the one or more processors, the one or more programs including instructions for performing the method of any one of claims 1-13.
